(19) Europäisches Patentamt / European Patent Office / Office européen des brevets

(11) **EP 2 785 806 B1**

(12) **EUROPÄISCHE PATENTSCHRIFT**

(45) Veröffentlichungstag und Bekanntmachung des Hinweises auf die Patenterteilung:
**23.12.2015 Patentblatt 2015/52**

(21) Anmeldenummer: **13756348.2**

(22) Anmeldetag: **20.08.2013**

(51) Int Cl.:
*C09D 7/12* (2006.01)  *C09D 7/14* (2006.01)
*C09D 5/02* (2006.01)  *C09D 5/03* (2006.01)
*C09D 5/08* (2006.01)  *C09D 5/10* (2006.01)
*C09D 5/44* (2006.01)  *C22C 1/04* (2006.01)
*C22C 1/10* (2006.01)  *C22C 18/00* (2006.01)
*C09D 5/38* (2006.01)

(86) Internationale Anmeldenummer:
**PCT/EP2013/067334**

(87) Internationale Veröffentlichungsnummer:
**WO 2014/029781 (27.02.2014 Gazette 2014/09)**

(54) **ZINKMAGNESIUMLEGIERUNG-KORROSIONSSCHUTZPIGMENTE, KORROSIONSSCHUTZLACK UND VERFAHREN ZUR HERSTELLUNG DER KORROSIONSSCHUTZPIGMENTE**

ZINC-MAGNESIUM ALLOY ANTICORROSION PIGMENTS, ANTICORROSION PAINT, AND METHOD FOR THE PRODUCTION OF SAID ANTICORROSION PIGMENTS

PIGMENTS ANTI-CORROSION À BASE D'ALLIAGES DE ZINC ET DE MAGNÉSIUM, PEINTURE ANTI-CORROSION ET PROCÉDÉ DE PRODUCTION DES PIGMENTS ANTI-CORROSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2012 DE 102012107633**

(43) Veröffentlichungstag der Anmeldung:
**08.10.2014 Patentblatt 2014/41**

(73) Patentinhaber: **Eckart GmbH**
**91235 Hartenstein (DE)**

(72) Erfinder:
• **RUPPRECHT, Markus**
 **92265 Edelsfeld (DE)**
• **WOLFRUM, Christian**
 **91052 Erlangen (DE)**
• **PFAMMATTER, Dominik**
 **CH-3952 Susten (CH)**
• **STOLL, Mark**
 **90513 Zirndorf (DE)**
• **WEIß, Harald**
 **90765 Fürth (DE)**
• **KLAUMÜNZER, Thomas**
 **91301 Forchheim (DE)**

(74) Vertreter: **Louis Pöhlau Lohrentz**
**Patentanwälte**
**Postfach 30 55**
**90014 Nürnberg (DE)**

(56) Entgegenhaltungen:
DE-A1-102009 052 399  JP-A- 2000 080 309
JP-A- 2008 223 137  JP-A- 2011 037 949

• BATTOCCHI D ET AL: "Electrochemical behaviour of a Mg-rich primer in the protection of Al alloys", CORROSION SCIENCE, OXFORD, GB, Bd. 48, Nr. 5, 1. Mai 2006 (2006-05-01), Seiten 1292-1306, XP028025695, ISSN: 0010-938X, DOI: 10.1016/J.CORSCI.2005.04.008 [gefunden am 2006-05-01]

**Beschreibung**

Die vorliegende Erfindung betrifft plättchenförmige Korrosionsschutzpigmente, eine Korrosionsschutzbeschichtung, die die erfindungsgemäßen Korrosionsschutzpigmente enthält, einen mit den erfindungsgemäßen Korrosionsschutzpigmenten oder mit der erfindungsgemäßen Korrosionsschutzbeschichtung beschichteten Gegenstand, ein Verfahren zur Herstellung der erfindungsgemäßen plättchenförmigen Korrosionsschutzpigmente sowie die Verwendung der erfindungsgemäßen Korrosionsschutzpigmente.

Mit Korrosion wird allgemein eine chemische oder elektrochemische Reaktion eines metallischen Werkstoffes mit Komponenten aus der Umgebung bezeichnet. Korrosion kann beispielsweise zu einer Oxidation eines Gegenstandes, wie beispielsweise eine Kraftfahrzeugkarosserie, eines Flugzeugrumpfes, einer Brücke, etc. führen. Bei einer Korrosion von Eisen wird auch von Rosten gesprochen. Neben Eisen können auch eine Vielzahl von weiteren Metallen oder Legierungen korrodieren, mithin oxidiert werden, wie beispielsweise Aluminium oder Aluminiumlegierungen.

Auf Grund von Korrosion kommt es an Gebäuden, Fahrzeugen, Schiffen, Flugzeugen etc. zu Schäden, die zu einer Funktionsunfähigkeit dieser Gegenstände führen können.

Wenn beispielsweise verschiedene Metalle mit unterschiedlichem elektrochemischen Potential unter feuchten Bedingungen, beispielsweise in Gegenwart von Salzwasser, in Kontakt kommen, so kann eine galvanische Zelle entstehen. Bei diesem Kontakt kommt es zu einer Oxidation des unedleren Metalls.

Dieser Effekt kann für den Korrosionsschutz genutzt werden, indem ein unedleres Metall als Opferanode auf einem zu schützenden edleren Metall aufgebracht wird.

Bei Einwirkung von Feuchtigkeit wird die Opferanode durch Oxidation aufgelöst und das zu schützende edlere Metall bleibt unversehrt.

So werden beispielsweise zum Schutz von Schiffsschrauben aus Aluminiumbronze, die mit aggressivem Salzwasser in Kontakt kommen, Opferanodenblöcke aus Zink an der Schiffschraube und entlang des Schiffsrumpfs angeordnet.

Aus der WO 2008/125610 A1 ist eine Beschichtungszusammensetzung bekannt, die Zink-Bismuth-Legierungspartikel enthält. Der Gehalt an Zink beträgt wenigstens 95 Gew.-%, vorzugsweise wenigstens 98 Gew.-%. Der Gehalt an Wismut liegt in einem Bereich von 0,05 bis 0,7 Gew.-%.

Aus der WO 2010/043708 A1 ist ein Verfahren zum elektrochemischen Korrosionsschutz einer metallischen Oberfläche bekannt, wobei sich die Metallpartikelkonzentration und/oder die Metallpartikelzusammensetzung an der dem gegen Korrosion zu schützenden Werkstück zugewandten Grenzfläche und an der dem Werkstück abgewandten Grenzfläche unterscheidet. Als metallische Partikel können eine Vielzahl von verschiedenen Partikel, wie beispielsweise Zink, Aluminium, Zinn, Magnesium, Nickel, etc., in Form von Plättchen, Lamellen, Körnern oder Staub verwendet werden.

Aus der KR 2010/023855 A ist ein Korrosionsschutzpigment bekannt, das beispielsweise aus einer Zink-Magnesium-Legierung oder einer Aluminium-Magnesium-Legierung besteht. Bei den Pigmenten aus der Zink-Magnesium-Legierung liegt der Zinkanteil in einem Bereich von 90 bis 99,5 M-% und der Magnesiumanteil in einem Bereich von 10 bis 0,5 M-%. Äußerst bevorzugt besteht die Legierung aus 98 M-% Zink und 2 M-% Magnesium.

Aus der DE 10 2009 028 667 A1 ist ein Korrosionsschutzpigment mit einer Kern-Hülle-Struktur bekannt, wobei der Kern aus einem oder mehreren Metallpartikeln besteht. Dieser Kern ist mit einer Hülle versehen, die auf ihrer Außenseite hydrophobe Gruppen besitzt. Die Metallpartikel werden aus der Gruppe, die aus Magnesium, Zink und Aluminium besteht ausgewählt. Alternativ können auch Metalllegierung als Metallpartikel verwendet werden, die einen Hauptbestandteil aufweisen, der entweder Magnesium, Zink oder Aluminium ist. Der Kern mit einem oder mehreren Metallpartikeln ist dabei sphärisch ausgebildet.

Aus der GB 846,904 ist eine binäre Zink-Magnesium-Legierung bekannt, die 10 Gew.-% Magnesium enthält. Diese Zink-Magnesium-Legierung liegt in Form von Barren vor, die zunächst mechanisch gebrochen und sodann in einer Kugelmühle bis zu einer Größe von 10 $\mu$m vermahlen wird. Das erhaltene Produkt liegt in Pulverform vor.

Die DE 10 2007 021 602 A1 offenbart nicht näher spezifizierte Zink-Magnesium-Legierungspartikel als Korrosionsschutzpigmente. Ebenso offenbart die DE 10 2008 020 216 A1 nicht näher spezifizierte Zink-haltige niedrigschmelzende Pigmente in einem Verfahren zum Schützen eines Metalls vor Korrosion.

Die EP 2 246 396 A1 offenbart die Verwendung von Zink-Nickel-, Zink-Zinn-, Zink-Eisen-, Zink-Aluminium- und Zink-Aluminium-Magnesium-Legierung als Metallpulver zur Verwendung beim Korrosionsschutz.

Die US 2,877,126 offenbart die Verwendung eines Metallpulvers aus einer binären Magnesium-Zink-Legierung für den Korrosionsschutz. Der Anteil von Magnesium liegt dabei in einem Bereich zwischen 15 und 30 Gew.-% und der Anteil von Zink in einem Bereich von 70 bis 85 Gew.-%.

Plättchenförmige Zinkpigmente und Zinklegierungspigmente wie Zinkaluminiumlegierungspigmente und Zinkzinnlegierungspigmente sind kommerziell erhältlich. Sie werden beispielsweise von der Fa. Eckart Suisse hergestellt und vertrieben. Sie werden durch Vermahlen von Zinkgrieß in Kugelmühlen in Testbenzin und üblicherweise Stearinsäure als Schmiermittel hergestellt. Reine ZnMg-Legierungspartikel sind derzeit jedoch nur in der aus der Verdüsung erhältlichen annähernd sphärischen Form verfügbar. Dies wird darauf zurückgeführt, dass diese Partikel sehr spröde sind und bei der Vermahlung eher zerbrechen als verformt werden.

Die US 2004/0191555 A1 offenbart Korrosionsschutzpigmente auf Basis von partikulärem Zink, das mit Aluminium, Zinn, Magnesium, Nickel, Kobalt, Mangan und Mischungen davon legiert sein kann.

Die EP 2 060 345 A1 offenbart Zinklegierungspartikel zur Verwendung in Korrosionsschutzfarben. Die Zinklegierungspartikel können 0,01 bis 30 Gew.-% Magnesium enthalten. Das Aspektverhältnis der Zinklegierungspartikel muss zwischen 1 und 1,5 liegen. Bereits ein Aspektverhältnis von mehr als 2 hat sich als nachteilig herausgestellt.

Das US-Patent 8,114,527 B2 offenbart eine Korrosionsschutzbeschichtung mit Zinklegierungspartikeln, die 0,1 bis 30 Gew.-% Magnesium enthalten können. Die Korrosionsschutzbeschichtung enthält dabei die Zinklegierungspartikel in einer bimodalen Korngrößenverteilung. Die feinteilige Fraktion weist dabei einen Korngrößendurchmesser von 0,05 bis 5 $\mu$m und die grobkörnige Fraktion einen Korngrößendurchmesser von 6 bis 100 $\mu$m auf.

Grundsätzlich ist beim Korrosionsschutz die Verwendung von plättchenförmigen Pigmenten von Vorteil, da plättchenförmige Pigmente im Unterschied zu Pigmenten mit sphärischen oder irregulären Geometrien eine Barrierewirkung nach Aufbringung auf dem gegen Korrosion zu schützenden Gegenstand aufweisen.

Reine Zn-Partikel können zwar in eine Plättchenform ausgeformt werden, jedoch ist das elektrochemische Potential von reinem Zink zu gering, als dass derartige Pigmente als Opferanode für bestimmte Metalle oder Legierungen wie Aluminium und seine Legierungen eingesetzt werden können. Legierungspigmente wie ZnMg$_{26}$ besitzen zwar ein ausreichendes elektrochemisches Potential, sind jedoch sehr spröde und zerbrechen daher äußerst leicht beim Versuch sie mit Standardverfahren zu vermahlen. Beispielsweise wird in der GB 846,904 offenbart, dass durch Vermahlung von Zink-Magnesium-Legierungspartikeln ein Endprodukt in Pulverform erhalten wird. In dieser Pulverform liegen die zerkleinerten Zink-Magnesium-Partikel mit sphärischer und/oder irregulärer Geometrie vor. Korrosionsschutzpigmente wie Chromate haben sich zwar über viele Jahre in Applikationen wie dem Aerospace-Bereich als hocheffizient erwiesen, jedoch scheint ein zukünftiger Einsatz infolge ihrer Toxizität nicht mehr möglich. Demgemäß besteht das Bedürfnis neue Korrosionsschutzpigmente bereitzustellen, welche beispielsweise verbesserte Eigenschaften gegenüber den bekannten ZnMg-Partikeln bieten und/oder als Ersatz für beispielsweise Strontiumchromat in Anwendungsbereichen wie dem Aerospacesektor dienen können.

Aufgabe der vorliegenden Erfindung ist es, einen verbesserten Korrosionsschutz, insbesondere für Aluminium oder Aluminiumlegierungen, bereitzustellen. Insbesondere sollen Korrosionsschutzpigmente bereitgestellt werden, die auf einem gegenüber Korrosion zu schützenden Gegenstand mit einer dünneren Pigmentdicke aufgebracht werden können, wobei die mittlere Pigmentdicke deutlich unterhalb von 1 $\mu$m liegen sollte.

Die der vorliegenden Erfindung zu Grunde liegende Aufgabe wird durch Bereitstellung von plättchenförmigen Zinkmagnesiumlegierungspigmenten gelöst, wobei die plättchenförmigen Zinkmagnesiumlegierungspigmente 25,1 bis 76,85 mol-% Zn, 23 bis 67,3 mol-% Mg, 0,15 bis 7,6 mol-% Mn, Be, Y, Li, Sn und Mischungen davon und 0 bis 5 mol-% Al, Ti, Fe, Cu und Mischungen davon umfassen, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren.

Zinkmagnesiumlegierungspigmente im Sinne der vorliegenden Erfindung sind dadurch gekennzeichnet, dass sie maßgeblich aus einer Zinkmagnesiumlegierung bestehen. Insbesondere stellen die vorgenannten spezifizierten Bestandteile Zn, Mg, Mn, Be, Y, Li, Sn, Al, Ti, Fe und Cu mindestens 93 Gew.-%, vorzugsweise mindestens 95 Gew.-%, mehr bevorzugt mindestens 96 Gew.-%, noch mehr bevorzugt mindestens 98 Gew.-% und am meisten bevorzugt mindestens 99 Gew.-% der erfindungsgemäßen Zinkmagnesiumlegierungspigmente dar, bezogen auf das Gesamtgewicht der Zinkmagnesiumlegierungspigmenten. Beispiele weiterer enthaltener Bestandteile sind metallische, halbmetallische oder nichtmetallische Verunreinigungen oder beispielsweise in einer oberflächlichen Oxidschicht enthaltener Sauerstoff. Insbesondere kann es bevorzugt sein, dass neben den vorgenannten spezifizierten Bestandteilen höchstens 2 Gew.-%, vorzugsweise höchstens 1,5 Gew.-%, mehr bevorzugt höchstens 1 Gew.-% und noch mehr bevorzugt nur Spurenbestandteile anderer Stoffe neben Sauerstoff nachweisbar sind. Hierbei beziehen sich die Gew.-%-Angaben auf das Zinklegierungspigment. Verständlicherweise sind keine Stoffe umfasst, welche beispielsweise nur auf der Oberfläche der Zinkmagnesiumlegierungspigmente infolge des Austrocknens einer entsprechenden Paste aufgetrocknet wurden.

Die Bestimmung der Legierungsbestandteile der Korrosionsschutzpigmente kann mittels verschiedener dem Fachmann bekannter Verfahren erfolgen, wobei die genaue Auswahl der entsprechenden Verfahren von den zu bestimmenden Bestandteilen und deren Mengen beeinflusst wird. So werden vom Fachmann beispielsweise verschiedene Verfahren bevorzugt, um die Menge spezifischer Stoffe zu bestimmen, welche als Hauptbestandteil oder Spurenbestandteil vorliegen. Beispiele vom Fachmann typischerweise eingesetzter Messmethoden sind ICP (inductively coupled plasma / induktiv gekoppeltes Plasma) beispielsweise gekoppelt mit MS (mass spectrometry / Massenspektrometrie) oder OES (optical emission spectrometry / optische Emissionsspektroskopie), F-AES (flame atomic emission spectrophotometry / Flammen-Atomemissionsspektrometrie), MPT-AES (microwave plasma torch atomic emission spectrometry / Mikrowellen-Plasmafackel-Atomemissionsspektrometrie), AAS (atomic absorption spectrometry / Atomabsorptionsspektrometrie), etc.. Im Rahmen der Probenvorbereitung werden hierbei auf der Oberfläche anhaftende Stoffe gründlich entfernt. Dem Fachmann ist bewusst, dass geringfügige Schwankungen in den Messergebnissen auftreten können, so dass die Bestimmung mehrerer Proben, beispielsweise etwa 10 Proben, vorzugsweise 10 Proben, erforderlich sein kann.

Bevorzugte Ausführungsformen sind in den abhängigen Ansprüchen 2 bis 9 angegeben.

Ebenfalls wird die der vorliegenden Erfindung zu Grunde liegenden Aufgabe durch Bereitstellung einer Korrosionsschutzbeschichtung gelöst, die die erfindungsgemäßen Zinkmagnesiumlegierungspigmente enthält.

Auch wird die Aufgabe der vorliegenden Erfindung durch Bereitstellung eines Gegenstandes gelöst, wobei der Gegenstand die erfindungsgemäßen Zinkmagnesiumlegierungspigmente oder eine erfindungsgemäße Korrosionsschutzbeschichtung aufweist.

Bevorzugte Weiterbildungen des erfindungsgemäßen Gegenstandes sind in den Ansprüchen 12 und 13 angegeben.

Die Aufgabe der Erfindung wird auch durch Bereitstellung eines Verfahrens zum Herstellen von plättchenförmigen Zinkmagnesiumlegierungspigmenten nach einem der Ansprüche 1 bis 9 gelöst, wobei das Verfahren folgenden Schritt aufweist:

Mechanisches Verformen von nicht-plättchenförmigen Zinkmagnesiumlegierungspartikeln, wobei die nicht-plättchenförmigen Zinkmagnesiumlegierungspartikel 25,1 bis 76,85 mol-% Zn, 23 bis 67,3 mol-% Mg, 0,15 bis 7,6 mol-% Mn, Be, Y, Li, Sn und Mischungen davon und 0 bis 5 mol-% Al, Ti, Fe, Cu und Mischungen davon umfassen, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren.

Die Aufgabe wird ferner durch die Verwendung von Zinkmagnesiumlegierungspigmenten nach einem der Ansprüche 1 bis 9 beim Korrosionsschutz eines Gegenstandes, der vorzugsweise aus Aluminium oder einer Aluminiumlegierung besteht oder Aluminium oder eine Aluminiumlegierung aufweist, gelöst.

Die Erfinder haben festgestellt, dass es hiermit beispielsweise überraschend einfach ist plättchenförmigen Zinkmagnesiumlegierungspartikeln bereitzustellen, wobei die plättchenförmigen Zinkmagnesiumlegierungspigmente 25,1 bis 76,85 mol-% Zn, 23 bis 67,3 mol-% Mg, 0,15 bis 7,6 mol-% Mn, Be, Y, Li, Sn und Mischungen davon und 0 bis 5 mol-% Al, Ti, Fe, Cu und Mischungen davon umfassen, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, und die mittlere Dicke $h_{50}$ der Pigmente kleiner als 1 $\mu$m, vorzugsweise kleiner 500 nm, ist.

Gemäß einer weiteren bevorzugten Ausführungsform der Erfindung enthalten die plättchenförmigen Zinkmagnesiumlegierungspartikel 25,1 bis 76,85 mol-% Zn, 23 bis 67,3 mol-% Mg, 0,15 bis 7,6 mol-% Mn, Be, Y, Li, Sn und Mischungen davon und 0 bis 3,7 mol-% Al, Ti, Fe, Cu und Mischungen davon, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, und wobei Zn, Mg, Mn, Be, Y, Li, Sn, Al, Ti, Fe und Cu insgesamt mindestens 93 Gew.-% der plättchenförmigen Zinkmagnesiumlegierungspartikel bezogen auf deren Gesamtgewicht darstellen.

Gemäß einer weiteren bevorzugten Ausführungsform der Erfindung enthalten die plättchenförmigen Zinkmagnesiumlegierungspartikel 32,5 bis 72,09 mol-% Zn, 27,7 bis 61,8 mol-% Mg, 0,21 bis 5,7 mol-% Mn, Be, Y, Li, Sn und Mischungen davon und 0 bis 3,7 mol-% Al, Ti, Fe, Cu und Mischungen davon, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren.

Gemäß einer weiteren bevorzugten Ausführungsform der Erfindung enthalten die plättchenförmigen Zinkmagnesiumlegierungspartikel 32,5 bis 72,09 mol-% Zn, 27,7 bis 61,8 mol-% Mg, 0,21 bis 5,7 mol-% Mn, Be, Y, Li, Sn und Mischungen davon und 0 bis 3,2 mol-% Al, Ti, Fe, Cu und Mischungen davon, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, und wobei Zn, Mg, Mn, Be, Y, Li, Sn, Al, Ti, Fe und Cu insgesamt mindestens 96 Gew.-% der plättchenförmigen Zinkmagnesiumlegierungspartikel bezogen auf deren Gesamtgewicht darstellen.

Ferner hat sich Mangan als besonders gut geeignetes erfindungsgemäß einzusetzender Legierungsbestandteil erwiesen. Gemäß weiteren bevorzugten Ausführungsformen der Erfindung enthalten die plättchenförmigen Zinkmagnesiumlegierungspigmente Li, Be, Y und Sn in einer Menge von jeweils höchstens 1 mol-%, vorzugsweise jeweils höchstens 0,7 mol-%, mehr bevorzugt jeweils höchstens 0,4 mol-%, jeweils bezogen auf die mol-%-Anteile auf die Gesamtmolmenge der Elemente Zn, Mg, Mn, Be, Y, Li, Sn, Al, Ti, Fe und Cu. Insbesondere ist es hierbei bevorzugt, wenn der Gesamtanteil von Li, Be, Y und Sn höchstens 2 mol-%, vorzugsweise höchstens 1,3 mol-%, mehr bevorzugt höchstens 0,9 mol-%, beträgt.

Gemäß weiteren bevorzugten Ausführungsformen der Erfindung enthalten die vorgenannten plättchenförmigen Zinkmagnesiumlegierungspigmente höchstens 3 mol-%, vorzugsweise höchstens 2,3 mol-%, mehr bevorzugt höchstens 1,8 mol-% Al, Ti, Fe, Cu oder Mischungen hiervon, wobei sich die mol-%-Anteile auf die Gesamtmolmenge der Elemente Zn, Mg, Mn, Be, Y, Li, Sn, Al, Ti, Fe und Cu beziehen. Insbesondere ist es bevorzugt, dass sich die vorgenannten mol-% Angaben auf die Gesamtmenge der Elemente Be, Y, Li, Sn, Al, Ti, Fe und Cu beziehen. Insbesondere ist es hierbei bevorzugt, dass Ti, Fe und Cu jeweils in einer Menge von höchstens 1,2 mol-% und Al in einer Menge von höchstens 1,5 mol-%, vorzugsweise Ti, Fe und Cu jeweils in einer Menge von höchstens 0,9 mol-% und Al in einer Menge von höchstens 1,3 mol-%, mehr bevorzugt Ti, Fe und Cu jeweils in einer Menge von höchstens 0,6 mol-% und Al in einer Menge von höchstens 0,9 mol-% vorliegt.

Ferner beträgt bei weiteren Ausführungsformen der Anteil an Cu in den erfindungsgemäßen plättchenförmigen Zinkmagnesiumlegierungspigmenten vorzugsweise höchstens 1,6 mol-%, mehr bevorzugt höchstens 1,2 mol-%, noch mehr bevorzugt höchstens 0,9 mol-% und noch mehr bevorzugt höchstens 0,4 mol-%, wobei sich die mol-%-Anteile auf die Gesamtmolmenge der Elemente Zn, Mg, Mn, Be, Y, Li, Sn, Al, Ti, Fe und Cu beziehen. Insbesondere kann es bevorzugt sein, dass Kupfer nur als Spurenbestandteil oder gar nicht nachgewiesen werden kann.

Bei weiteren bevorzugten Ausführungsformen enthalten die Pigmente Mangan in einer Menge aus einem Bereich von 0,24 bis 5,8 mol-%, vorzugsweise von 0,27 bis 4,9 mol-%, noch weiter bevorzugt von 0,31 bis 4,3 mol-%, noch weiter bevorzugt von 0,36 bis 3,6 mol-%, noch weiter bevorzugt von 0,4 bis 3,1 mol-%, noch weiter bevorzugt etwa 0,8 mol-%, wobei sich die mol-%-Anteile auf die Gesamtmolmenge der Elemente Zn, Mg, Mn, Be, Y, Li, Sn, Al, Ti, Fe und Cu beziehen.

Den Erfindern ist es überraschenderweise gelungen auf besonders einfache Weise herstellbare auf Zink und Magnesium basierende Zinkmagnesiumlegierungspigmente, ungeachtet der Sprödigkeit einer Zink-Magnesium-Legierung, in Plättchenform bereitzustellen. So wurde überraschend festgestellt, dass die Duktilität der erfindungsgemäßen Zinkmagnesiumlegierungspartikel signifikant gesteigert werden kann, wenn derartige Legierungen wenigstens eine weitere Legierungskomponente, die aus der Gruppe, die aus Mangan, Beryllium, Yttrium, Lithium, Zinn und Mischungen davon besteht, ausgewählt wird, in geeigneter Menge zugesetzt wird. Vorzugsweise handelt es sich bei der erfindungsgemäß zu verwendenden Legierung um eine Zinkmagnesiumlegierung, die 25,1 bis 76,85 mol-% Zn, 23 bis 67,3 mol-% Mg, 0,15 bis 7,6 mol-% Mn, Be, Y, Li, Sn und Mischungen davon und 0 bis 5 mol-% Al, Ti, Fe, Cu und Mischungen davon umfasst, wobei die Menge an Be, Y, Li, Sn oder deren Mischungen höchstens 2 mol-%, vorzugsweise höchstens 1 mol-% beträgt, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren.

Die erfindungsgemäßen plättchenförmigen Zinkmagnesiumlegierungspigmenten auf Basis der erfindungsgemäß verwendeten Legierung mit einem Anteil von 25,1 bis 76,85 mol-% Zink, 23 bis 67,3 mol-% Magnesium, 0,15 bis 7,6 mol-%, vorzugsweise 0,15 bis 6,3 mol-%, wenigstens einer weiteren Legierungskomponente, die aus der Gruppe, die aus Mangan, Beryllium, Yttrium, Lithium, Zinn und Mischungen davon besteht, ausgewählt wird, sowie optional 0 bis 5 mol-%, vorzugsweise 0 bis 3,7 mol-%, Aluminium, Titan, Eisen, Kupfer oder Mischungen davon, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, ermöglichen die Bereitstellung eines verbesserten Korrosionsschutzes.

Zink weist bei Standardbedingungen (25°C, 1013,25 mbar, pH 0) ein elektrochemisches Standardpotential von -0,76 V auf. Magnesium weist unter Standardbedingungen ein elektrochemisches Standardpotential von -2,362 V auf. Mithin weist Magnesium ein negativeres elektrochemisches Standardpotential als Zink auf. Bei einem Anteil von 23 bis 67,3 mol-% Magnesium, bezogen auf die Gesamtmolmenge der Elemente Zn, Mg, Mn, Be, Y, Li, Sn, Al, Ti, Fe und Cu, in der erfindungsgemäß zu verwendenden, auf den Hauptbestandteilen Zink und Magnesium basierenden Legierung wird das elektrochemische Standardpotential der plättchenförmigen Zinkmagnesiumlegierungspigmente unter das von reinem Zink abgesenkt. Äußerst vorteilhaft wird die chemische Reaktivität der überwiegend auf Zink und Magnesium basierenden Legierung durch den Anteil an Magnesium nicht zu stark erhöht. Eine zu große Reaktivität von Korrosionsschutzpigmenten führt zu einem raschen Verbrauch der Zinkmagnesiumlegierungspigmente und in Folge dessen zu einem zeitlich stärker beschränkten Korrosionsschutz.

Es hat sich herausgestellt, dass mit einem Anteil von 23 bis 67,3 mol-% Magnesium, bezogen auf die Gesamtmolmenge der Elemente Zn, Mg, Mn, Be, Y, Li, Sn, Al, Ti, Fe und Cu, in der erfindungsgemäß zu verwendenden auf Zink und Magnesium basierenden Legierung zum einen ein verbesserter Korrosionsschutz auf Grund des Anteils an Magnesium erhalten wird und zum anderen ein ausreichend langlebiger Korrosionsschutz bereitgestellt werden kann.

Die zwingend vorhandene dritte Komponente dient im Wesentlichen dazu, die Duktilität der erfindungsgemäß zu verwendenden Legierung zu erhöhen. Die erhöhte Duktilität erlaubt die Bereitstellung von plättchenförmigen Zinkmagnesiumlegierungspigmente durch mechanische Verformung. Des Weiteren ermöglicht die erfindungsgemäß zu verwendende Legierung die Bereitstellung von äußerst dünnen Plättchen in einem kürzeren Zeitraum, verglichen mit einer ausschließlich aus Zink und Magnesium bestehenden Legierung. Ein weiterer wesentlicher Vorteil der erfindungsgemäß zu verwendenden Zusammensetzung liegt darin, dass aufgrund der erhöhten Duktilität die mechanische Verformung der Partikel zu den plättchenförmigen Zinkmagnesiumlegierungspigmenten mit verschiedenen Vorrichtungen, beispielsweise Kugelmühle, Dreiwalzenstuhl, Trommelmühle, Rührwerkskugelmühle, Schwingmühle, Kollergang, Attritor etc. bewirkt werden kann.

Vorzugsweise handelt es sich bei der erfindungsgemäß zu verwendenden auf Zink und Magnesium basierenden Legierung um eine ternäre Zink-Magnesium-Mangan-Legierung.

Bei den in den erfindungsgemäßen Zinkmagnesiumlegierungen enthaltenen Stoffen neben Zn, Mg, Mn, Be, Y, Li, Sn, Al, Ti, Fe und Cu kann es sich um Nichtmetalle, Halbmetalle und Nichtmetalle handeln. Beispiele der vorgenannten Halbmetalle sind B, Ge und Si. Beispiele der Metalle sind Blei, Calcium, Strontium, Barium, Natrium, Kalium, Wismut, Indium, Cer, Tellur, Silber, Quecksilber, Eisen, Kobalt, Nickel, Chrom, Niob, Vanadium, Molybdän, Tantal, Osmium, Wolfram, Zirkonium, Gold, Platin, Cadmium, Lanthan, Gallium. Beispiele entsprechender Nichtmetalle sind Kohlenstoff, Stickstoff und Sauerstoff. Diese Stoffe können beispielsweise als Verunreinigungen in den eingesetzten Metallen enthalten gewesen sein. Nichtmetalle wir Sauerstoff können beispielsweise in Form einer Oxidschicht auf der Oberfläche gebunden werden.

Die Verwendung von Beryllium ist aufgrund dessen Toxizität nur bedingt erstrebenswert, da größere Mengen lediglich für beschränkte Anwendungsfelder eingesetzt werden könnten und daher eine strikte Produkttrennung mit großem Aufwand wenig attraktiv sein kann. Ferner muss befürchtet werden, dass die Verfügbarkeit von Lithium infolge der Entwicklung hinsichtlich der Batteriesysteme in Zukunft gestört sein könnte. Daher kann es bei den vorgenannten Ausführungsformen bevorzugt sein, dass die Menge an Be oder Li in den erfindungsgemäßen plättchenförmigen Korrosionsschutzpigmenten höchstens 1,5 mol-%, vorzugsweise höchstens 1,1 mol-%, mehr bevorzugt höchstens 0,7 mol-%, noch mehr bevorzugt höchstens höchstens 0,4 mol-%, beträgt. Besonders bevorzugt gilt dies sowohl für Lithium als auch Beryllium.

Im Besonderen ist es bevorzugt, das die plättchenförmigen Zinkmagnesiumlegierungspigmente Aluminium in einer Menge von weniger als 1,3 mol-%, vorzugsweise von weniger als 0,9 mol-%, noch weiter bevorzugt von weniger als 0,6 mol-%, bezogen auf die Gesamtmolmenge der Elemente Zn, Mg, Mn, Be, Y, Li, Sn, Al, Ti, Fe und Cu. Inbesondere ist es bevorzugt, wenn die Menge an Aluminium unter der Nachweisgrenze liegt.

Gemäß einer weiteren bevorzugten Ausführungsform der Erfindung enthalten die plättchenförmigen Zinkmagnesiumlegierungspigmente 38,8 bis 68,57 mol-% Zink, 31,2 bis 55,7 mol-% Magnesium sowie 0,18 bis 6,3 mol-%, vorzugsweise 0,21 bis 5,7 mol-%, noch weiter bevorzugt 0,23 bis 5,5 mol-%, Mangan, Beryllium, Yttrium, Lithium, und/oder Zinn, vorzugsweise Mangan, sowie 0 bis 4,2 mol-%, vorzugsweise 0 bis 3,7 mol-%, noch weiter bevorzugt 0 bis 3,5 Gew.-%, Aluminium, Titan, Eisen und/oder Kupfer, wobei sich die mol-%-Anteile auf die Gesamtmolmenge der Elemente Zn, Mg, Mn, Be, Y, Li, Sn, Al, Ti, Fe und Cu beziehen und sich die mol-%-Anteile zu 100 mol-% aufsummieren.

Weiter bevorzugt sind plättchenförmige Zinkmagnesiumlegierungspigmente, die 42,2 bis 56,4 mol-% Zink und 41,6 bis 55,2 mol-% Magnesium, 0,18 bis 6,3 mol-%, noch weiter bevorzugt 0,21 bis 5,7 mol-%, Mangan, Beryllium, Yttrium, Lithium, und/oder Zinn, wobei der Anteil an Be, Y, Li und Sn vorzugsweise insgesamt höchstens 1,5 mol-% beträgt, sowie 0 bis 4,2 mol-%, vorzugsweise 0 bis 3,7 mol-%, noch weiter bevorzugt 0 bis 3,5 mol-%, Aluminium, Titan, Eisen und/oder Kupfer, aufweisen, wobei sich die mol-%-Anteile auf die Gesamtmolmenge der Elemente Zn, Mg, Mn, Be, Y, Li, Sn, Al, Ti, Fe und Cu beziehen und sich die mol-%-Anteile zu 100 mol-% aufsummieren. Hierbei ist es insbesondere bevorzugt, dass Zn, Mg, Mn, Be, Y, Li, Sn, Al, Ti, Fe und Cu mindestens 95 Gew.-% der erfindungsgemäßen plättchenförmigen Zinkmagnesiumlegierungspigmente darstellen

Weiter bevorzugt sind plättchenförmige Zinkmagnesiumlegierungspigmente, die 43,8 bis 53,2 mol-% Zink und 42,7 bis 51,9 mol-% Magnesium sowie 0,21 bis 5,7 mol-%, noch weiter bevorzugt 0,23 bis 5,5 mol-%, Mangan, Beryllium, Yttrium, Lithium, und/oder Zinn, wobei der Anteil an Be, Y, Li und Sn vorzugsweise insgesamt höchstens 0,8 mol-% beträgt, sowie optional 0 bis 4,2 mol-%, vorzugsweise 0 bis 3,7 Gew.-%, noch weiter bevorzugt 0 bis 3,5 Gew.-%, Aluminium, Titan, Eisen und/oder Kupfer, aufweisen, wobei sich die mol-%-Anteile auf die Gesamtmolmenge der Elemente Zn, Mg, Mn, Be, Y, Li, Sn, Al, Ti, Fe und Cu beziehen und sich die mol-%-Anteile zu 100 mol-% aufsummieren.

Besonders gute antikorrosive Eigenschaften scheinen für ZinkMagnesiumlegierungspigmente erzielt zu werden, welche sich durch ein bestimmtes Verhältnis von Zink zu Magnesium auszeichnen. Hierbei wird vermutet, dass dies auf eine Ausbildung spezifischer intermetallischer Phasen und/oder einer spezifischen Entmischung zurückgeführt werden kann. Bei bestimmten Ausführungsformen ist es bevorzugt, dass das molare Verhältnis von Zink zu Magnesium in einem Bereich von vorzugsweise 0,75 zu 1 bis 1,35 zu 1, vorzugsweise in einem Bereich von 0,85 zu 1 bis 1,25 zu 1, mehr bevorzugt in einem Bereich von 0,9 zu 1 bis 1,2 bis 1, noch mehr bevorzugt in einem Bereich von 0,93 zu 1 bis 1,15 zu 1, liegt.

Die Menge an Al, Ti, Fe und Cu in den erfindungsgemäßen plättchenförmigen Korrosionsschutzpigmenten beträgt höchstens 5 mol-%, vorzugsweise höchstens 4,2 mol-%, mehr bevorzugt höchstens 3,7 mol-%, noch mehr bevorzugt höchstens 3,5 mol-%, wobei sich die mol-%-Anteile auf die Gesamtmolmenge der Elemente Zn, Mg, Mn, Be, Y, Li, Sn, Al, Ti, Fe und Cu beziehen. Hierbei ist es insbesondere bevorzugt, dass die Anteile an Ti, Fe und Cu jeweils höchstens 1,3 mol-%, vorzugsweise höchstens 1 mol-%, mehr bevorzugt höchstens 0,8 mol-% betragen.

Als sehr geeignet hat sich im Sinne der Erfindung eine Legierung mit einem Anteil von 44,2 bis 52,1 mol-% Zn, 43,3 bis 50,9 mol-% Mg, 0,37 bis 5 mol-% Mn, Be, Y, Li und/oder Sn, 0 bis 4,2 mol-% Al, Ti, Fe und/oder Cu, wobei die Anteile an Be, Y, Li und Sn jeweils unter 1 mol-% und die Anteile an Ti, Fe und Cu jeweils unter 0,8 mol-% liegen, erwiesen, wobei sich die mol-%-Anteile auf die Gesamtmolmenge der Elemente Zn, Mg, Mn, Be, Y, Li, Sn, Al, Ti, Fe und Cu beziehen.

Die vorstehenden und nachstehenden Angaben in mol-% sind mit der Maßgabe zu verstehen, dass auch bei Einschränkung der Ansprüche auf bevorzugte Bereiche und Komponenten, sämtliche der im ursprünglichen Anspruch 1 angegebenen Komponenten nur in solchen Anteilen vorliegen, dass der Gesamtanteil sämtlicher spezifizierter Komponenten der Zinkmagnesiumlegierung in den Bereichen 25,1 bis 76,85 mol-% Zn, 23 bis 67,3 mol-% Mg, 0,15 bis 7,6 mol-% Mn, Li, Be, Y, Sn und Mischungen davon, sowie 0 bis 5 mol-% Al, Ti, Fe, Cu und Mischungen davon liegt, wobei sich die mol-%-Anteile auf die Gesamtmolmenge der Elemente Zn, Mg, Mn, Be, Y, Li, Sn, Al, Ti, Fe und Cu beziehen und sich die mol-%-Anteile zu 100 mol-% aufsummieren.

Überraschenderweise ist mithin die besonders einfache Bereitstellung von plättchenförmigen Zinkmagnesiumlegierungspigmenten möglich, die eine mittlere Dicke deutlich unterhalb von 1 $\mu$m, vorzugsweise von weniger als 700 nm aufweisen. Schon die Bereitstellung von plättchenförmigen magnesiumhaltigen Zinkpigmenten mit entsprechenden Gehalten an Zink und Magnesium ist erstaunlich, da bei einer auf Zink und Magnesium als Hauptkomponenten basierenden Legierung ein hohes Maß an Sprödigkeit erwartet wird, die einer mechanischen Verformung zu Plättchen entgegenwirkt. Der zusätzliche Anteil an Mangan, Beryllium, Yttrium, Lithium, und/oder Zinn, insbesondere an Mangan, erzeugt überraschenderweise eine Duktilität, die die Herstellung plättchenförmiger Pigmente überraschend einfach ermöglicht. Völlig unerwartet war jedoch, dass es erfindungsgemäß möglich ist, nicht nur plättchenförmige magnesiumhaltige Zinkpigmente, sondern plättchenförmige magnesiumhaltige Zinkpigmente mit äußerst geringen Dicken oder sehr dünne magnesiumhaltige Zinkpigmente unter Standardbedingungen innerhalb kurzer Zeit bereitzustellen.

Überraschenderweise lässt sich die erfindungsgemäße Legierungszusammensetzung beispielsweise in herkömmlichen Kugelmühlen zu Plättchen verformen, ohne dass es zu einem signifikanten Abrieb oder der Erzeugung von irregulär geformten Partikeln kommt.

Ferner zeigte sich, dass es sowohl bei Verwendung einer Kugelmühle als auch bei Verwendung einer Rührwerkskugelmühle möglich ist, eine gleichmäßige Vermahlung unter deutlich vermindertem Bruch der größeren Partikel zu erzielen.

Der Begriff "Rührwerkskugelmühle" bedeutet im Sinne der vorliegenden Erfindung, dass die Mühle in ihrem Inneren einen Rotor aufweist, der die Mahlkörper, vorzugsweise, Kugeln in Bewegung versetzt oder zu deren Bewegung beiträgt. Eine Spezialform der Rührwerkskugelmühle weist einen Rotor in ihrem Inneren auf, während gleichzeitig die Außenwandung rotiert.

Bei bestimmten bevorzugten Ausführungsformen sind die erfindungsgemäßen Zinkmagnesiumpigmente dadurch gekennzeichnet, dass deren mittlere Dicke weniger als 1 $\mu$m, vorzugsweise weniger als 900 nm, mehr bevorzugt weniger als 700 nm, mehr bevorzugt weniger als 500 nm, noch mehr bevorzugt weniger als 350 nm und am meisten bevorzugt weniger als 300 nm beträgt.

Erfindungsgemäß ist es bevorzugt, plättchenförmige Zinkmagnesiumlegierungspigmente bereitzustellen, die eine mittlere Dicke aus einem Bereich von 70 nm bis unter 900 nm aufweisen.

Gemäß einer weiteren bevorzugten Ausführungsform liegt die mittlere Dicke der Zinkmagnesiumlegierungspigmente in einem Bereich von 70 nm bis unter 700 nm, noch weiter bevorzugt von 80 nm bis unter 500 nm. Als sehr geeignet hat sich auch eine Dicke aus einem Bereich von 90 nm bis unter 350 nm erwiesen. Äußerst bevorzugt liegt die mittlere Dicke in einem Bereich von 100 nm bis unter 300 nm.

Die mittlere Dicke der Zinkmagnesiumlegierungspigmente kann aus einer über Dickenauszählung mit Rasterelektronenmikroskopie (REM) ermittelten Dickenverteilung in der Darstellung als Summenhäufigkeitsverteilung bestimmt werden. Bei dieser Methode werden mittels Rasterelektronenmikroskopie (REM) so viele Teilchen vermessen, dass eine repräsentative statistische Auswertung vorgenommen werden kann. Üblicherweise werden etwa 100 Teilchen, vorzugsweise 100 Teilchen, vermessen.

Die Dickenverteilung wird dabei zweckmäßigerweise in Form einer Summenhäufigkeitsverteilungskurve dargestellt. Als Mittelwert bietet sich der $h_{50}$-Wert der Summenhäufigkeitsverteilung an. Ein Maß für den Anteil der dickeren Pigmente ist der $h_{90}$-Wert. Er besagt, dass 90% aller Pigmentteilchen eine Dicke gleich diesem Wert und/oder unterhalb dieses Wertes besitzen. In analoger Weise ist der $h_{10}$-Wert ein Maß für den Anteil der dünneren Pigmente in der Dickenverteilung, der besagt, dass 10% aller Pigmentteilchen eine Dicke gleich diesem Wert und/oder unterhalb dieses Wertes besitzen. Der $h_{50}$-Wert gibt folglich den Wert der mittleren Dicke an, d.h., dass 50% aller Pigmentteilchen eine Dicke gleich diesem Wert und/oder unterhalb dieses Wertes besitzen

Die Messung Dicke der einzelnen Pigmente mittels REM sowie die Berechnung der mittleren Dicke erfolgt nach der in der DE 10 315 775 A1 beschriebenen Methode.

Kurz zusammengefasst kann die Dicke der Zinkmagnesiumlegierungspigmente mittels REM wie folgt ermittelt werden:

Die erfindungsgemäßen plättchenförmigen Zinkmagnesiumlegierungspigmente werden zunächst mit Aceton gewaschen und dann ausgetrocknet.

Ein in der Elektronenmikroskopie übliches Harz, beispielsweise TEMPFIX (Gerhard Neubauer Chemikalien, D-48031 Münster, Deutschland), wird auf einen Probenteller aufgebracht und auf einer Heizplatte bis zum Erweichen erhitzt. Nachfolgend wird der Probenteller von der Heizplatte genommen und die Zinkmagnesiumlegierungspigmente werden auf das erweichte Harz gestreut. Das Harz wird durch die Abkühlung wieder fest und die aufgestreuten Zinkmagnesiumlegierungspigmente können - bedingt durch das Wechselspiel zwischen Adhäsion und Schwerkraft - nahezu senkrecht stehend und fixiert auf dem Probenteller präpariert werden. Dadurch sind die Pigmente im Elektronenmikroskop seitlich gut zu vermessen. Bei der Vermessung der Dicke wird der azimuthale Winkel α des Pigmentes zu einer zur Oberfläche normalen Ebene geschätzt und bei der Dickenauswertung nach der Formel

$$h_{eff} = h_{mess}/\cos\alpha$$

berücksichtigt. Von den $h_{eff}$-Werten wird anhand der relativen Häufigkeiten die Summenverteilungskurve erstellt. Es werden ca. 100 Pigmente, vorzugsweise 100 Pigmente, gezählt.

Sofern die vorgenannte Verfahrensvariante nicht einsetzbar ist, können können die Dicken der Pigmente beispielsweise auch anhand von Querschliffen von lackierten Proben gezählt werden. Diese Methode sollte jedoch nur bei einer sehr guten planparallelen Orientierung der Pigmente angewandt werden. Andernfalls können die Pigmente im Querschliff mit einem azimuthalen Neigungswinkel, der jedoch für den Beobachter nicht erkennbar ist, orientiert sein. Dies führt systematisch zu der Messung von höheren Dicken.

Die Bereitstellung von plättchenförmigen Korrosionsschutzpigmenten mit den vorstehend angegebenen geringen mittleren Dicken erlaubt die Bereitstellung einer Korrosionsschutzbeschichtung, bei der die Gesamtdicke signifikant verringert werden kann. Dies ermöglicht die Verwendung der erfindungsgemäßen Pigmente insbesondere in Anwendungen des Korrosionsschutzes mit sehr dünnen Beschichtungen wie beispielsweise Flugzeugbeschichtungen oder Coil-Coating.

Auf Grund der geringen Dicke der erfindungsgemäßen plättchenförmigen Zinkmagnesiumlegierungspigmente ist das Deckvermögen der erfindungsgemäßen plättchenförmigen Korrosionsschutzpigmente, d.h. die Abdeckung der Fläche pro Gewichtseinheit Pigment, sehr hoch. Bei gleicher Gewichtseinheit, beispielsweise 1 Gramm Pigment, weisen dünnere plättchenförmige Zinkmagnesiumlegierungspigmente ein höheres Deckvermögen auf als plättchenförmige Zinkmagnesiumlegierungspigmente mit einer größeren Dicke, da die Anzahl an plättchenförmigen Pigmenten pro Gewichtseinheit bei dünneren plättchenförmigen Zinkmagnesiumlegierungspigmenten höher ist als bei dickeren plättchenförmigen Zinkmagnesiumlegierungspigmenten. Die dünneren plättchenförmigen Zinkmagnesiumlegierungspigmente können sich bei dem vor Korrosion zu schützenden Gegenstand, beispielsweise einen Flugzeugrumpf oder eine Fahrzeugkarosserie, nebeneinander und übereinander so anordnen, dass zum einen ein äußerst effektiver Barrierenschutz aufgebaut wird und zum anderen der vor Korrosion zu schützende Gegenstand zuverlässig von den plättchenförmigen Zinkmagnesiumlegierungspigmenten mit geringer Dicke abgedeckt werden.

Gemäß einer weiteren bevorzugten Ausführungsform der Erfindung weisen die plättchenförmigen Zinkmagnesiumlegierungspigmente einen mittleren Durchmesser $D_{50}$ aus einem Bereich von 4 bis 35 μm, weiter bevorzugt von 4,5 bis 30 μm, noch weiter bevorzugt von 5 bis 25 μm auf. Als sehr geeignet hat sich auch ein mittlerer Durchmesser von 5 bis 18 μm erwiesen.

Gemäß einer weiteren bevorzugten Ausführungsform weisen die plättchenförmigen Zinkmagnesiumlegierungspigmente eine Größenverteilung mit einem Span ΔD gemäß der Formel (I) Span ΔD = $(0_{90}-D_{10})/D_{50}$ von 1 bis 2,3 auf. Weiter bevorzugt beträgt der Span 1,2 bis 2,1, noch weiter bevorzugt 1,3 bis 1,9.

Der Span ΔD stellt eine Charakterisierung der Breite der Teilchengrößenverteilung dar. Je kleiner der Span ist, desto enger ist die Teilchengrößenverteilung.

Der $D_{10}$-, $D_{50}$-, bzw. $D_{90}$-Wert der Summenhäufigkeitsverteilung der erfindungsgemäßen Korrosionsschutzpigmente, wie sie durch Laserbeugungsmethoden erhalten wird, gibt an, dass 10%, 50% bzw. 90% der Zinkmagnesiumlegierungspigmente einen Durchmesser aufweisen, der gleich oder kleiner als der jeweils angegebene Wert ist. Die Größenverteilungskurve kann mit einem Gerät der Firma Malvern (Gerät: Malvern Mastersizer 2000) gemäß Herstellerangaben bestimmt werden. Die Auswertung der Streulichtsignale erfolgt dabei nach der Mie-Theorie.

Gemäß einer bevorzugten Weiterbildung der Erfindung liegt der $D_{10}$-Wert in einem Bereich von 0,9 μm bis 6 μm, weiter bevorzugt von 1,1 μm bis 5,2 μm, noch weiter bevorzugt von 1,2 μm bis 4,3 μm, liegt. Je größer der $D_{10}$-Wert ist, desto geringer soll der Feinanteil sein.

Weiterhin ist bevorzugt, dass der $D_{50}$-Wert in einem Bereich von 3,0 μm bis 25,0 μm, weiter bevorzugt von 3,5 μm bis 20 μm, noch weiter bevorzugt von 4 μm bis 14 μm, liegt.

Weiterhin ist bevorzugt, dass der $D_{90}$-Wert in einem Bereich von 5 μm bis 40 weiter bevorzugt von 5,5 μm bis 30 μm, noch weiter bevorzugt von 6 bis 25 μm, liegt. Gemäß einer weiteren bevorzugten Ausführungsform der Erfindung weisen die plättchenförmigen Zinkmagnesiumlegierungspigmente nur solche Kombination von $D_{10}$-, $D_{50}$- und $D_{90}$-Werten auf, so dass der Span ΔD in den vorstehend angegebenen Bereichen liegt. Der $D_{10}$-Wert ist ein Maß für den Feinanteil in einer Partikelgrößenverteilung.

Die erfindungsgemäßen plättchenförmigen Zinkmagnesiumlegierungspigmente weisen typischerweise einen äußerst geringen Anteil an nicht-plättchenförmigen Partikeln, beispielsweise in Form von Abrieb oder irregulär geformten Bruchstücken auf.

Auf Grund des äußert geringen Anteils an sphärisch und/oder irregulär geformten Partikeln bei den erfindungsgemäßen plättchenförmigen Korrosionsschutzpigmenten kommt es aufgrund der Plättchenform der Zinkmagnesiumlegierungspigmente zum einen zu einer Verbesserung der Barrierewirkung und zum anderen zu einer verbesserten Opferanodenwirkung.

Vorzugsweise liegt das Aspektverhältnis, d.h. das Verhältnis von mittlerem Pigmentdurchmesser ($D_{50}$) zu mittlerer Pigmentdicke ($h_{50}$) in einem Bereich von 10 bis 200, weiter bevorzugt von 12 bis 100, weiter bevorzugt von 15 bis 75, noch weiter bevorzugt von 18 bis 50, noch weiter bevorzugt von 20 bis 40.

Besonders bevorzugte erfindungsgemäße Zinkmagnesiumlegierungspigmente weisen eine Zusammensetzung von 32,5 bis 72,09 mol-% Zn, 27,7 bis 61,8 mol-% Mg, 0,21 bis 5,7 mol-% Mn, Li, Be, Y und/oder Sn, 0 bis 4,2 mol-% Al, Ti, Fe und/oder Cu auf, sowie eine mittlere Dicke von 90 nm bis unter 350 nm auf, wobei die Anteile an Li, Be, Y, Sn jeweils höchstens 1 mol-% und die Anteile an Ti, Fe und Cu jeweils höchstens 0,8 mol-% betragen, wobei sich die mol-%-Anteile auf die Gesamtmolmenge der Elemente Zn, Mg, Mn, Be, Y, Li, Sn, Al, Ti, Fe und Cu beziehen und sich die mol-%-Anteile zu 100 mol-% aufsummieren, und wobei Zn, Mg, Mn, Be, Y, Li, Sn, Al, Ti, Fe und Cu mindestens 95 Gew.-% der erfindungsgemäßen plättchenförmigen Zinkmagnesiumlegierungspigmente darstellen.

Ganz besonders bevorzugte plättchenförmige Zinkmagnesiumlegierungspigmente weisen eine Zusammensetzung von 38,8 bis 68,57 mol-% Zn, 31,2 bis 55,7 mol-% Mg, 0,21 bis 5,7 mol-% Mn, Li, Be, Y und/oder Sn, 0 bis 3,7 mol-% Al, Ti, Fe und/oder Cu auf, sowie eine mittlere Dicke von 90 nm bis 350 nm auf, wobei die Anteile an Li, Be, Y, Sn jeweils höchstens 0,7 mol-%, der Anteil an Al höchstens 1,3 mol-% und die Anteile an Ti, Fe und Cu jeweils höchstens 0,6 mol-% betragen, wobei sich die mol-%-Anteile auf die Gesamtmolmenge der Elemente Zn, Mg, Mn, Be, Y, Li, Sn, Al, Ti, Fe und Cu beziehen und sich die mol-%-Anteile zu 100 mol-% aufsummieren, und Zn, Mg, Mn, Be, Y, Li, Sn, Al, Ti, Fe und Cu mindestens 96 Gew.-% der erfindungsgemäßen plättchenförmigen Zinkmagnesiumlegierungspigmente darstellen.

Die Herstellung der jeweiligen Legierung erfolgt durch Schmelzen der entsprechenden Legierungsbestandteile unter Berücksichtigung der jeweiligen Schmelztemperatur (Zink: etwa 420°C, Magnesium: etwa 650°C, Mangan: etwa 1246°C, Beryllium: etwa 1278°C, Yttrium: 1526°C, Lithium: etwa 181°C, Zinn: etwa 232°C).

Aus den Komponenten Zink, Magnesium und der weiteren Komponente(n) wird eine homogene Schmelze unter Inertgas, vorzugsweise Argon, hergestellt. Die Schmelze wird sodann auf herkömmliche Art und Weise unter Inertgas, vorzugsweise unter Argon, unter Erhalt eines Legierungspulvers verdüst. In dem erhaltenen Legierungspulver können sich Einschlüsse aus elementarem Metall oder intermetallischen Phasen ausbilden. Das Pulver liegt vorzugsweise in sphärischer Form vor. Aus dem so erhaltenen Legierungspulver können durch mechanische Verformung die erfindungsgemäßen plättchenförmigen Zinkmagnesiumlegierungspigmente hergestellt werden.

Gemäß einer weiteren bevorzugten Ausführungsform sind die plättchenförmigen Zinkmagnesiumlegierungspigmente durch mechanische Verformung erhalten worden.

Grundsätzlich ist es möglich, plättchenförmige Zinkmagnesiumlegierungspigmente über physikalische Dampfabscheidung herzustellen. Das definierte Verdampfen von Zinkmetall, Magnesiummetall sowie von einer oder mehreren weiteren Komponenten, beispielsweise Mangan, unter Erhalt einer spezifizierten Legierung ist technisch aufwendig und mit sehr hohen Kosten verbunden. Bei Korrosionsschutzpigmenten handelt es sich jedoch um ein in großen Mengen verwendetes Gut, das preisgünstig herstellbar sein muss. Insoweit ist die Herstellung der plättchenförmigen Zinkmagnesiumlegierungspigmente über physikalische Dampfabscheidung ein möglicher Weg, der jedoch im Hinblick auf seine Kosten kein marktfähiges Produkt ermöglicht.

Mithin ist es bevorzugt, die erfindungsgemäßen plättchenförmigen Zinkmagnesiumlegierungspigmente durch mechanische Verformung herzustellen. Die durch mechanische Verformung hergestellten plättchenförmigen Zinkmagnesiumlegierungspigmente unterscheiden sich strukturell von den durch physikalische Dampfabscheidung hergestellten plättchenförmigen Korrosionsschutzpigmenten durch die Oberflächenbeschaffenheit. Über physikalische Dampfabscheidung werden Pigmente mit absolut planer Oberfläche erhalten. Des Weiteren weisen die über physikalische Dampfabscheidung hergestellten metallischen Pigmente nach Ablösung vom Trägermaterial gerade Bruchkanten auf.

Die durch mechanische Verformung hergestellten erfindungsgemäßen plättchenförmigen Zinkmagnesiumlegierungspigmente zeichnen sich zum einen durch eine nicht absolut plane Oberfläche, sondern vielmehr durch eine leicht wellige Oberfläche aus. Ferner weisen die durch mechanische Verformung hergestellten plättchenförmigen Zinkmagnesiumlegierungspigmente abgerundete und mit leichten Einrissen versehene Randbereiche auf. Strukturell lassen sich mithin durch physikalische Dampfabscheidung hergestellte plättchenförmige Zinkmagnesiumlegierungspigmente von durch mechanische Verformung erhaltene plättchenförmige Zinkmagnesiumlegierungspigmente beispielsweise mittels Rasterelektronenmikroskopie (REM) leicht unterscheiden.

Erfindungsgemäß lassen sich plättchenförmige Zinkmagnesiumlegierungspigmente durch mechanische Verformung kostengünstig herstellen. Beim Korrosionsschutz kommt es weniger auf die optischen Eigenschaften der Pigmente an. Vielmehr ist für einen effektiven Korrosionsschutz die plättchenförmige Struktur der Pigmente wesentlich. Dass die durch mechanische Verformung hergestellten plättchenförmigen Zinkmagnesiumlegierungspigmente eine deutlich ungleichmäßigere Oberfläche aufweisen, ist für einen wirksamen Korrosionsschutz nicht nachteilig.

Gegenstand der vorliegenden Erfindung ist ferner eine Korrosionsschutzbeschichtung, die die erfindungsgemäßen plättchenförmigen Zinkmagnesiumlegierungspigmente enthält.

Die erfindungsgemäßen Zinkmagnesiumlegierungspigmente können in die unterschiedlichsten Beschichtungszusammensetzungen, wie beispielsweise Farben und Lacke, eingearbeitet werden.

Der Anteil der Zinkmagnesiumlegierungspigmente kann gemäß dem jeweiligen Anforderungsprofil in der Korrosionsschutzbeschichtung eingestellt werden. Üblicherweise liegt der Anteil der Zinkmagnesiumlegierungspigmente in der Korrosionsschutzbeschichtung vorzugsweise in einem Bereich von 10 bis 80 Gew.-%, weiter bevorzugt von 15 bis 70 Gew.-%, noch weiter bevorzugt von 20 Gew.-% bis 65 Gew-%, bezogen auf das Gesamtgewicht der Korrosionsschutzbeschichtung.

Der Anteil an Bindemittel in der Korrosionsschutzbeschichtung liegt dabei vorzugsweise in einem Bereich 15 bis 85 Gew.-%, weiter bevorzugt von 25 bis 75 Gew.-%, noch weiter bevorzugt von 35 bis 70 Gew-%, bezogen auf das Gesamtgewicht der Korrosionsschutzbeschichtung.

Der Anteil an Lösungsmittel liegt im Falle eines Lackes oder einer Farbe in der Korrosionsschutzbeschichtung vorzugsweise in einem Bereich von 1 bis 10 Gew.-%, weiter bevorzugt von 2 bis 8 Gew.-%, noch weiter bevorzugt von 2 Gew.-% bis 5 Gew.-%. In dem organischen Lösungsmittel kann auch Wasser enthalten sein. Vorzugsweise liegt der Wasseranteil, bezogen auf das Gesamtgewicht des Lösungsmittels, bei weniger als 1 Gew.-%, weiter bevorzugt bei weniger als 0,9 Gew.-%, noch weiter bevorzugt bei als 0,8 Gew.-%.

Bei der vorstehend angegebenen Zusammensetzung der Korrosionsschutzbeschichtung handelt es sich um die aufzubringende Zusammensetzung, mithin nicht um die getrocknete Zusammensetzung.

Als Lösungsmittel können die üblicherweise in Farben und Lacken verwendeten organischen Lösungsmittel, beispielsweise Ethoxypropylacetat, Methylethylketon, Methylisobutylketon, Ethylacetat, Butylacetat, Xylol, Aceton und Mischungen davon, verwendet werden.

Die erfindungsgemäße Korrosionsbeschichtung kann als Einkomponentensystem (1 K) oder als Zweikomponentensystem (2K) ausgebildet sein.

Die Korrosionsschutzbeschichtung kann ferner als anodischer oder kathodischer Tauchlack ausgebildet sein.

Bei einer weiteren erfindungsgemäßen Weiterbildung ist die erfindungsgemäße Korrosionsschutzbeschichtung als Pulverlack ausgebildet.

Die erfindungsgemäßen plättchenförmigen Zinkmagnesiumlegierungspigmente sind in der Anwendung äußerst vielfältig und können mithin in die unterschiedlichsten Beschichtungszusammensetzungen eingearbeitet werden.

Als Bindemittel können in Verbindung mit den erfindungsgemäßen plättchenförmigen Korrosionsschutzpigmenten alle üblichen Farb- und Lackbindemittel verwendet werden. Die jeweils verwendeten Bindemittel werden in Abhängigkeit vom Lösemittel und/oder dem jeweiligen Beschichtungsverfahren ausgewählt.

Bei Pulverbeschichtungen werden vorzugsweise thermoplastische oder duroplastische Harze als Bindemittel verwendet.

Beispielsweise können als thermoplastische Bindemittel Polyvinylchlorid, Polyamide, Polyethylene, Polypropylene, Polyvinylidenfluoride und anderen thermoplastische Harze verwendet werden.

Als duroplastische oder wärmehärtbare Bindemittel können beispielsweise Epoxidharze, Polyurethanharze, Polyesterharze, Acrylatharze, etc. verwendet werden.

Als sehr geeignet haben sich Epoxidharze und Polyurethanharze, beispielsweise zur Verwendung in Pulverlacken, erwiesen. Ferner werden Epoxidharze einerseits und Polyurethanharze andererseits insbesondere als Bindemittelsysteme für die Außenlackierung von Flugzeugen verwendet. So können beispielsweise die von der Firma Sherwin-Williams, USA, vertriebene Bindemittelsysteme oder von der Firma Dupont, USA, vertriebene Bindemittelsysteme verwendet werden.

Die erfindungsgemäßen Korrosionsschutzbeschichtungen können die üblichen Additive enthalten, wie beispielsweise Netz- oder Dispergiermittel, Oberflächenaddive, Mattierungsmittel, Rheologieadditive, Lichtschutzmittel, beispielsweise UV-Stabilisatoren, Trockenstoffe, Biozide oder Mischungen davon.

Die erfindungsgemäßen plättchenförmigen Zinkmagnesiumlegierungspigmente sind im Prinzip auf allen üblichen Substraten als Korrosionsschutzlackierung aufzubringen. Bevorzugt werden sie jedoch auf spezielle Substrate insbesondere umfassend unedlere Metalle wie Aluminiumlegierungen aufgebracht. Beispiele entsprechender Aluminiumlegierungen sind AA2024, AA5754. Da das Standardpotential von Aluminium niedriger ist als jenes von Zink, können Zinkplättchen (oder Zinkstaub) hier nicht verwendet werden.

Die erfindungsgemäßen plättchenförmigen Zinkmagnesiumlegierungspigmente eignen sich gemäß einer bevorzugten Ausführungsform der Erfindung zur Verwendung bei der Bandbeschichtung, auch Coil coating genannt, von beispielsweise Aluminium-, Aluminiumlegierungs- oder Stahlbändern oder Aluminium-, Aluminiumlegierungs- oder Stahlblechen.

Die mittels Bandbeschichtung beschichteten Bleche finden vielfältige Anwendung, beispielsweise bei Fassaden, Dachabdeckungen oder Haushaltsgeräte, wie beispielsweise Kühlschränke, Waschmaschinen, Spülmaschinen, etc..

Auf Grund der äußerst geringen Dicke der erfindungsgemäßen Zinkmagnesiumlegierungspigmente in einem Bereich von 70 nm bis weniger als 900 nm, wie vorstehend angegeben, ist es möglich, eine Korrosionsschutzbeschichtung mit einer Gesamttrockendicke von vorzugsweise 10 bis 200 μm, vorzugsweise von 25 bis 150 μm, weiter bevorzugt von 30 bis 100 μm, aufzubringen. Als sehr geeignet hat sich eine Gesamttrockendicke von 10 bis 40 μm erwiesen.

Es hat sich überraschend gezeigt, dass Korrosionsschutzbeschichtungen, vorzugsweise auf Epoxidharzbasis oder Polyurethanharzbasis, die die erfindungsgemäßen plättchenförmigen Korrosionsschutzpigmente, vorzugsweise in einer mittleren Dicke von etwa 80 nm bis weniger als 500 nm, weiter bevorzugt von etwa 90 nm bis weniger als 350 nm, noch weiter bevorzugt von 100 nm bis weniger als 300 nm, enthalten, für die Beschichtung von Flugzeugen besonders geeignet sind.

Korrosionsschutzbeschichtungen an Flugzeugen sind extremen Bedingungen ausgesetzt. Beispielsweise müssen diese Korrosionsschutzbeschichtungen Temperaturwechsel von +70°C bis -60°C in wenigen Minuten bestehen. Auch ist erforderlich, dass die Flugzeuglacke beständig sind gegenüber der in Reiseflughöhe auftretenden intensiven UV-Bestrahlung. Schließlich müssen Flugzeuglacke auch gegenüber chemischen und mechanischen Belastungen, wie beispielsweise gegenüber Kerosin- und Hydraulikflüssigkeit, Sandkörnern, Eiskristallen und schwingenden Tragflächen, beständig sein.

Die erfindungsgemäßen plättchenförmigen Zinkmagnesiumlegierungspigmente sind insbesondere zur Verwendung als Zinkmagnesiumlegierungspigmente in Lacken zur Lackierung von Flugzeugen geeignet.

Um das Gesamtgewicht eines Flugzeuges unter Berücksichtigung der erforderlichen Stabilität gering zu halten, werden im Flugzeugbau Aluminium-Legierungen eingesetzt. Zum einen findet als Aluminium-Legierung die als AA2024 bezeichnete Aluminium-Legierung Anwendung. Die Aluminium-Legierung AA2024 weist eine Dichte von 2,78 g/cm$^3$ auf und enthält in Aluminium etwa 4,3 bis 4,4 Gew.-% Kupfer, 0,5 bis 0,6 Gew.-% Mangan, 1,3 bis 1,5 Gew.-% Magnesium und weniger als etwa 0,5 Gew.-% Zink, Nickel, Chrom, Blei, und Wismut. Üblicherweise wird die Zusammensetzung der Aluminium-Legierung AA2024 mit $AlCu_4Mg_1$ angegeben. Diese Aluminium-Legierung besitzt die für den Flugzeugbau erforderlichen mechanischen Eigenschaften, jedoch eine schlechte Korrosionsbeständigkeit.

Eine weitere Aluminium-Legierung AA5754, die auch im Automobilbereich und Schiffsbau Anwendung findet, weist eine Dichte von etwa 2,66 g/cm$^3$ und enthält in Aluminium 2,6 bis 3,6 Gew.-%, Magnesium, 0,5 Gew.-%, Mangan, 0,4 Gew.-% Eisen, 0,4 Gew.-% Si, 0,3 Gew.-% Cr, 0,2 Gew.-% Zn, 0,15 Gew.-% Ti und 0,1 Gew.-% Cu. Üblicherweise wird die Zusammensetzung der Aluminium-Legierung AA5754 mit $AlMg_3$ angegeben.

Das elektrochemische Standardpotential von Zink beträgt -0,76 V, wohingegen das elektrochemische Standardpotential von Aluminium -1,66 V beträgt. Mithin ist Zink edler als Aluminium, weshalb es bei einem direkten Kontakt von Zink und Aluminium unter beispielsweise feuchten Bedingungen, zu einer Auflösung von Aluminium kommen würde.

Das elektrochemische Standardpotential wird bei den erfindungsgemäßen plättchenförmigen Zinkmagnesiumlegierungspigmenten im Wesentlichen durch Zink und Magnesium, die die beiden Hauptbestandteile der erfindungsgemäß verwendeten Legierungen darstellen, gebildet.

Das elektrochemische Standardpotential von Mangan beträgt -1,18 V, von Beryllium -1,85 V, von Yttrium -2,37 V, von Lithium -3,04 V und von Zinn -0,14 V. Da diese Metalle jedoch maximal in einem Anteil von 7,6 mol-% in der zu verwendenden Legierung enthalten sind, ist deren Einfluss auf das elektrochemische Standardpotential gering. Dies gilt insbesondere dann, wenn der Anteil der vorgenannten Komponenten an der Legierung in einem Bereich von 0,18 bis 6,3 mol-%, vorzugsweise von 0,21 bis 5,7 mol-%, noch weiter bevorzugt von 0,24 bis 5,2 mol-%, liegt, jeweils bezogen auf die Gesamtmolmenge der Elemente Zn, Mg, Mn, Be, Y, Li, Sn, Al, Ti, Fe und Cu.

Durch die Erhöhung des Anteils an Magnesium in der erfindungsgemäß verwendeten Legierung lässt sich das elektrochemische Standardpotential absenken, so dass ein effektiver Korrosionsschutz insbesondere im Hinblick auf die im Flugzeugbau verwendeten Aluminium-Legierungen gegeben ist.

Durch die plättchenförmige Struktur der erfindungsgemäßen Zinkmagnesiumlegierungspigmente können diese zum einen physikalisch effektiv als Barriereschutz und zum anderen effektiv als Opferanode, bedingt durch den flächigen Kontakt mit dem vor Korrosion zu schützenden Gegenstand, beispielsweise einem Flugzeug- oder Schiffsrumpf oder einer Karosserie, dienen.

Auf Grund der äußerst geringen Pigmentdicke der erfindungsgemäßen plättchenförmigen Zinkmagnesiumlegierungspigmente, können die erfindungsgemäßen plättchenförmigen Zinkmagnesiumlegierungspigmente in äußerst dünnen Beschichtungen, wie sie beispielsweise bei Flugzeugbeschichtungen erforderlich sind, mit Schichtdicken von etwa 30 μm und weniger verwendet werden.

Da die erfindungsgemäßen plättchenförmigen Zinkmagnesiumlegierungspigmente vorzugsweise eine mittlere Dicke von weniger als 1 μm, vorzugsweise von weniger als 700 nm, aufweisen, können sich in der Korrosionsschutzbeschichtung die erfindungsgemäßen plättchenförmigen Zinkmagnesiumlegierungspigmente nebeneinander und insbesondere mehrfach übereinander stapeln, sodass eine äußerst effektive physikalische Barriere gebildet wird. Bei einer Lackschichtdicke von 30 μm können mithin bei einer mittleren Dicke von höchstens 1 μm beispielsweise durchschnittlich bis zu 30 Lagen an erfindungsgemäßen plättchenförmigen Korrosionsschutzpigmenten übereinander angeordnet sein, wodurch ein äußerst effektiver Korrosionsschutz bewirkt wird.

Die erfindungsgemäßen plättchenförmigen Zinkmagnesiumlegierungspigmente können selbstredend nicht nur bei Flugzeuglackierungen Anwendung finden, sondern auch bei Schiffs- oder Bootlackierungen und auch bei Fahrzeugrahmen. Unter Fahrzeugrahmen werden dabei Kraftfahrzeugkarosserien sowohl an Automobilen, Lastkraftwagen als auch Motorräder oder Motorrollern verstanden.

Ebenfalls können die erfindungsgemäßen plättchenförmigen Zinkmagnesiumlegierungspigmente beim Korrosionsschutz von Gebäuden, Fassaden, Fenster- und Türrahmen, Brücken, Windrädern, Strommasten, etc. verwendet werden.

In Folge dessen wird die der Erfindung zu Grunde liegende Aufgabe auch durch einen mit den erfindungsgemäßen plättchenförmigen Korrosionsschutzpigmenten oder der erfindungsgemäßen Korrosionsschutzbeschichtung beschichteten Gegenstand gelöst. Der erfindungsgemäße Gegenstand wird dabei aus der Gruppe, die aus Flugzeug, Schiff, Boot, Fahrzeugrahmen, Dosen, Wandverkleidungen aus Metall, insbesondere aus Aluminium, Fahrräder, Gebäude, Fassade, Fenster- und Türrahmen, Strommast, Windrad und Brücke besteht, ausgewählt.

Besonders bevorzugt sind Gegenstände aus Aluminium oder Aluminium-Legierung oder Gegenstände, die mit Aluminium oder einer Aluminium-Legierung versehen sind. Somit handelt es sich bei dem Gegenstand vorzugsweise um Flugzeuge, Schiffe, Boote oder Fahrzeugkarosserien, insbesondere bevorzugt um Flugzeuge.

Die der Erfindung zu Grunde liegende Aufgabe wird ferner durch ein Verfahren zum Herstellen der erfindungsgemäßen plättchenförmigen Zinkmagnesiumlegierungspigmente gelöst. Das Verfahren weist dabei folgenden Schritt auf:

Mechanisches Verformen von nicht-plättchenförmigen Metallpartikeln, wobei die nicht-plättchenförmigen Metallpartikel 25,1 bis 76,85 mol-% Zn, 23 bis 67,3 mol-% Mg, 0,15 bis 7,6 mol-% Mn, Be, Y, Li, Sn und Mischungen davon und 0 bis 5 mol-% Al, Ti, Fe, Cu und Mischungen davon umfassen, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren, vorzugsweise unter Verwendung von Mahlkörpern in eine Plättchenform.

Wie bereits vorstehend ausgeführt, sind die zur Herstellung der erfindungsgemäßen plättchenförmigen Zinkmagnesiumlegierungspigmente verwendeten Legierungen duktil, so dass, ungeachtet des hohen Zink- und Magnesiumsanteils, Partikel, die vorzugsweise sphärisch sind, mechanisch gut verformt werden können. Die mechanische Verformung kann in einer herkömmlichen Kugelmühle durchgeführt werden. Auch kann beispielsweise eine Rührwerkskugelmühle oder ein Dreiwalzenstuhl verwendet werden.

Bei dem erfindungsgemäßen Verfahren werden nicht-plättchenförmige Metallpartikel, die vorzugsweise eine annähernd sphärische Geometrie aufweisen, verwendet. Die nicht-plättchenförmigen Metallpartikel der erfindungsgemäß verwendeten Legierung, die vorzugsweise eine annähernd sphärische Geometrie aufweisen, werden durch Verdüsen einer Metalllegierungsschmelze, auf herkömmliche Weise durch Verdüsen erhalten. Die nach der Verdüsung der Schmelze erhaltenen Metallpartikel sind in der Regel sphärisch und weisen einen mittleren Partikeldurchmesser in einem Bereich von 2 $\mu$m bis 100 $\mu$m, weiter bevorzugt von 5 $\mu$m bis 80 $\mu$m, noch weiter bevorzugt von 10 $\mu$m bis 40 $\mu$m auf.

Vorzugsweise weist das durch Verdüsung erhaltene Metallpulver eine enge Partikelgrößenverteilung auf. Es ist bevorzugt, dass die sphärischen Metallpartikel aus der erfindungsgemäß zu verwendenden Legierung einen $D_{10}$-Wert von 0,9 $\mu$m bis 6 $\mu$m, vorzugsweise von 1,2 bis 4,3, einen $D_{50}$-Wert von 3 $\mu$m bis 25 $\mu$m, vorzugsweise von 4 $\mu$m bis 14 $\mu$m und einen $D_{90}$-Wert von 5 $\mu$m bis 40 $\mu$m, vorzugsweise von 6 $\mu$m bis 25 $\mu$m, aufweisen.

Gemäß einer bevorzugten Weiterbildung des erfindungsgemäßen Verfahrens wird als Mahlaggregat eine Rührwerkskugelmühle eingesetzt.

Eine Rührwerkskugelmühle funktioniert nach dem Rotor-Stator Prinzip und unterscheidet sich dadurch deutlich von der normalerweise unter dem Begriff Kugelmühle verstandenen Mühlenform, auch wenn sie begrifflich gesehen eine Sonderform der Kugelmühle darstellt.

Rührwerkskugelmühlen bestehen aus einem vertikal oder horizontal angeordneten, meist zylindrischen Behälter, der zu 50 - 90 Vol.-%, vorzugsweise zu 70 bis 90 Vol.-%, mit Mahlkörpern, die zumeist aus Stahl, Glas oder verschleißfesten keramischen Materialien bestehen, gefüllt ist. Der Behälter stellt den Stator dar. Den Rotor bildet ein Rührwerk mit geeigneten Rührelementen (Stäben oder Scheiben) oder ein glattwandiger Rührkörper. Der Rührkörper wird angetrieben und sorgt für eine intensive Bewegung der Mahlkörper. Die Mahlgutsuspension, d.h. die nicht-plättchenförmigen Legierungspartikel, wird kontinuierlich durch den Mahlraum geleitet. Dabei werden die suspendierten Legierungspartikel durch Prall- und vor allem Scherkräfte zwischen den Mahlkörpern verformt und dispergiert. Am Austrag der Mühle erfolgt die Trennung von Mahlgut und Mahlkörpern mittels eines geeigneten Trennsystems, beispielsweise eines Siebs.

Die Rührwerkskugelmühle bewirkt, verglichen mit einer Kugelmühle, eine schonendere plastische Verformung der Legierungs-Partikel vorwiegend durch Scherkräfte.

Um eine langsame Verformung der nicht-plättchenförmigen Metallpartikel zu den erfindungsgemäßen plättchenförmigen Korrosionsschutzpigmenten zu bewirken, ohne dass es dabei zu einem wesentlichen Abrieb bzw. einer Zerkleinerung der nicht-plättchenförmigen Metallpartikel kommt, werden die Verfahrensparameter (z.B. Kugelgröße, Kugelmaterial, Umlaufgeschwindigkeit, Rotationsgeschwindigkeit, etc.) vorzugsweise derart gewählt, dass der Energieeintrag mindestens 2000 kJ pro kg plättchenförmige Zinkmagnesiumlegierungspartikel (kJ/kg), vorzugszweise mindestens 2800 kJ/kg, mehr bevorzugt mindestens 3300 kJ/kg, noch mehr bevorzugt mindestens 3800 kJ/kg und am meisten bevorzugt mindestens 4250 kJ/kg.

Der Energieeintrag kann beispielsweise mittels Messgeräten des betreffenden Aggregats bestimmt werden. Alternativ kann beispielsweise eine Bestimmung des Energieeintrags gemäß Formel (II) gemäß folgender Formel:

$$E_m(t) = \frac{\int_0^t (P(\tau) - P_0)d\tau}{m_P} \qquad \text{(II)}$$

erfolgen. Hierbei steht $E_m(t)$ für den Energieeintrag zum Zeitpunkt t, $P(\tau)$ für die in das betreffende Aggregat eingebrachte Leistung zum Zeitpunkt $\tau$, $P_0$ für die in das Aggregat eingebrachte Leistung in Abwesenheit von nichtsphärischen Metallpartikeln (Leerlaufleistung) und $m_P$ für die Masse der Metallpartikel. Zur Bestimmung der eingebrachten Leistung kann beispielsweise die zum Antrieb eines Elektromotors erforderliche Strommenge bestimmt werden. Insbesondere bevorzugt ist die Verwendung einer Rührwerkskugelmühle.

Ferner ist es bei weiteren Ausführungsformen bevorzugt, dass die Geschwindigkeit des Energieeintrags im erfindungsgemäßen Verfahren mindestens 500 kJ pro kg plättchenförmige Zinkmagnesiumlegierungspartikel (kJ/kg·h), vorzugsweise mindestens 580 kJ/kg·h, mehr bevorzugt mindestens 640 kJ/kg·h, noch mehr bevorzugt mindestens 690 kJ/kg·h, und am meisten bevorzugt mindestens 790 kJ/kg·h, beträgt. Hierbei ist es typischerweise ausreichend einen Durchschnittswert über den gesamten Zeitraum der Vermahlung zu bilden. Bei der Kombination hochenergetischer Vermahlungsabschnitte mit beispielsweise längeren Nachlaufzeiten bei z.B. weniger als 100 kJ/kg·h, insbesondere bei weniger als 10 kJ/kg·h wird die erfindungsgemäße Verformung jedoch primär durch die hochenergetischen Vermahlungsabschnitte bewirkt. Insbesondere ist es daher bevorzugt, dass die 2000 kJ pro kg plättchenförmigen Zinkmagnesiumpartikeln oder die weiter hierin spezifizierten absoluten Energieeinträge in Vermahlungsabschnitten mit mindestens 500 kJ/kg·h, vorzugsweise mindestens 580 kJ/kg·h, mehr bevorzugt mindestens 640 kJ/kg·h, noch mehr bevorzugt mindestens 690 kJ/kg·h, und am meisten bevorzugt mindestens 790 kJ/kg·h eingebracht wurden.

Insbesondere ist es bei den vorgenannten Ausführungsformen bevorzugt, dass mindestens 2800 kJ pro kg plättchenförmigen Zinkmagnesiumpartikeln (kJ/kg) bei einer Geschwindigkeit von mindestens 580 kJ pro kg plättchenförmige Zinkmagnesiumpartikel pro Stunde (kJ/kg·h), mehr bevorzugt mindestens 3300 kJ/kg bei einer Geschwindigkeit von mindestens 640 kJ/kg·h, noch mehr bevorzugt mindestens 3800 kJ/kg bei einer Geschwindigkeit von mindestens 690 kJ/kg·h und noch mehr mindestens 4250 kJ/kg bei einer Geschwindigkeit von mindestens 790 kJ/kg·h, eingetragen werden.

Optional kann sich an den Verfahrenschritt des mechanischen Verformens der nicht-plättchenförmigen Partikel in plättchenförmige Partikel ein Abtrennen der plättchenförmigen Zinkmagnesiumlegierungspigmente anschließen. Weiter kann sich optional ein Klassierungsschritt anschließen, bei dem eine gewünschte Partikelgrößenverteilung der plättchenförmigen Zinkmagnesiumlegierungspigmente eingestellt wird.

Das Klassieren, beispielsweise zur Abtrennung von etwaig vorhandenem Feinanteil, beispielsweise Abrieb, oder zur Einstellung eines gewünschten Spans ∆D, kann beispielsweise mittels Zyklon, Sieben, etc. durchgeführt werden.

Die Erfindung wird nachfolgend in Bezug auf die beigefügten Figuren und Beispiele näher erläutert, ohne darauf begrenzt zu sein.

**Abbildungen**

*Abbildungen* **1 und 2** zeigt rasterelektronenmikroskopische Aufnahmen von Partikeln gemäß Vergleichsbeispiel 1.

**Abbildungen 3 und 4** zeigt eine rasterelektronenmikroskopische Aufnahme von plättchenförmigen Pigmenten gemäß Beispiel 2.

**Abbildungen 5 und 6** zeigt eine rasterelektronenmikroskopische Aufnahme von plättchenförmigen Pigmenten gemäß Vergleichsbeispiel 3.

**Abbildungen 7 und 8** zeigt eine rasterelektronenmikroskopische Aufnahme von plättchenförmigen Pigmenten gemäß Beispiel 4.

**Beispiele**

Vergleichsbeispiel 1: Zinkmagnesiumlegierungspigmente (51,4 mol-% Zink, 48,6 mol-% Magnesium)

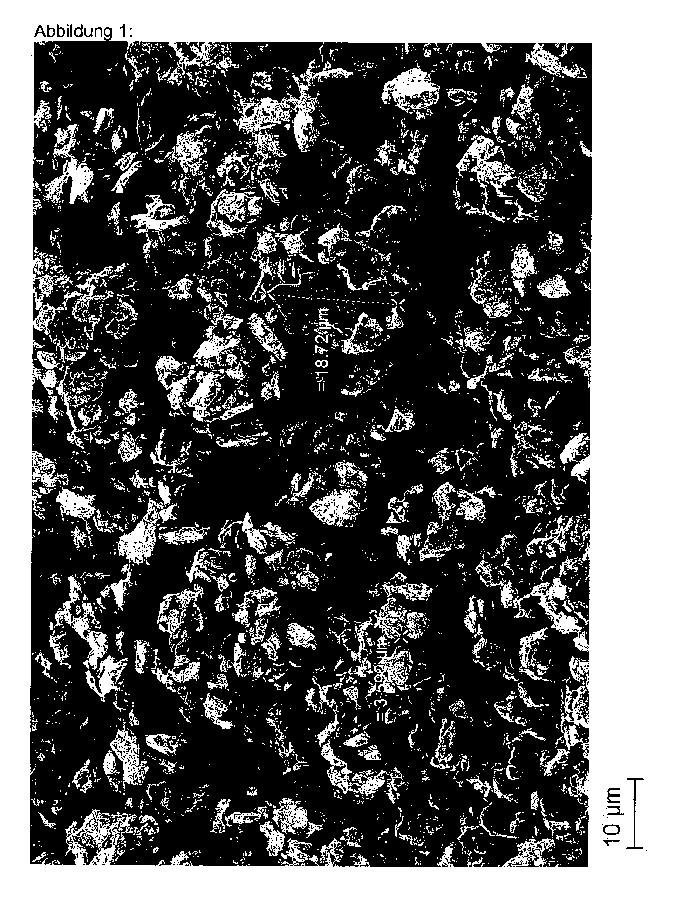

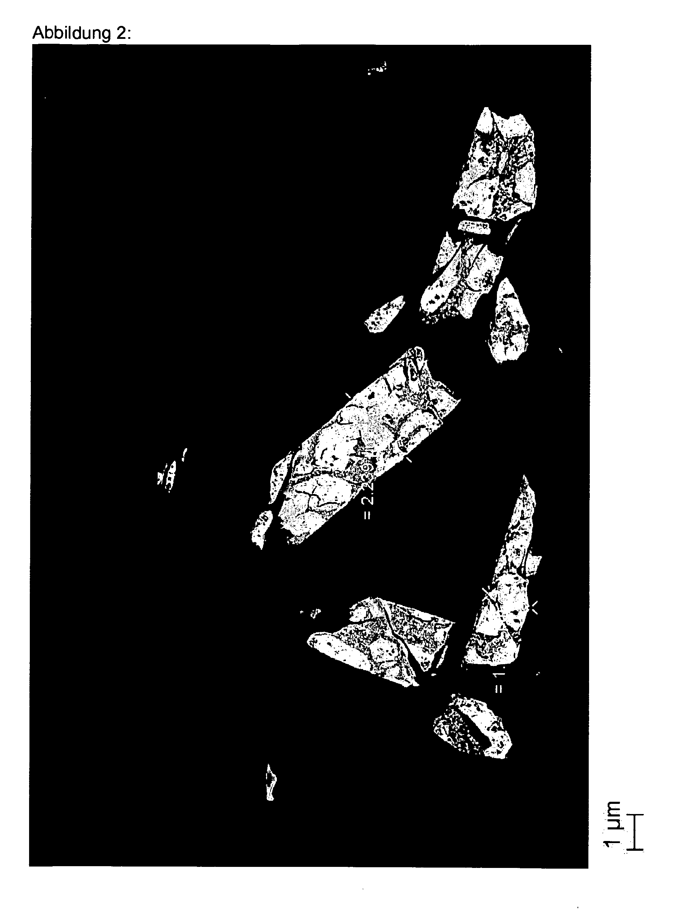

296 kg Zink, 104 kg Magnesium wurden in unter Argon inertisierten Schmelztiegel bei einer Temperatur von > 1300 °C geschmolzen. Die Schmelze wurde sodann durch eine Düse in einen Sprühbunker verdüst unter Erhalt eines Gries mit einer Partikelgrößenverteilung mit einem $D_{10}$ von 6,9 $\mu$m, einem $D_{50}$ von 16,8 $\mu$m und einem $D_{90}$ von 34,9 $\mu$m.
9 kg des Zink-Magnesium-Grieses wurden in 32 Liter Testbenzin (Lösemittel) in einer Kugelmühle (Abmessungen: Länge: 100. cm, Durchmesser: 100 cm) und Mahlkugeln aus Stahl (Durchmesser 12 mm) mit einer Umdrehungsgeschwindigkeit von 40 Umdrehungen pro Minute für 10 Stunden vermahlen. Danach wurden die Mahlkugeln und das Lösungsmittel von den erhaltenen Pigmenten abgetrennt. Die Partikelgrößenverteilung wurde in einem Malvern Mastersizer 2000 gemäß Herstellerangaben ($D_{10}$: 2,6 $\mu$m, $D_{50}$: 5,0 $\mu$m, $D_{90}$: 9,2 $\mu$m) und die mittlere Pigmentedicke ($h_{50}$ = 2 $\mu$m) mittels REM, wie oben und in der DE 103 15 775 A1 (Abs. [0125] bis [0127]) beschrieben, bestimmt.
Aus Abbildungen 1 + 2 ist ersichtlich, dass die erhaltenen Partikel Bruchstücke und Abrieb darstellen. Ferner wiesen die erhaltenen Partikel eine große mittlere Pigmentdicke von 2 $\mu$m auf. Eine längere Mahldauer führte nicht zu plättchenförmigen Pigmenten mit geringerer mittlerer Pigmentdicke, sondern lediglich zu einer weiteren Zerkleinerung der Partikel.

Beispiel 2: Zinkmagnesiummanganlegierungspigmente (50,64 mol-% Zink, 48,53 mol-% Magnesium, 0,83 mol-% Mangan)

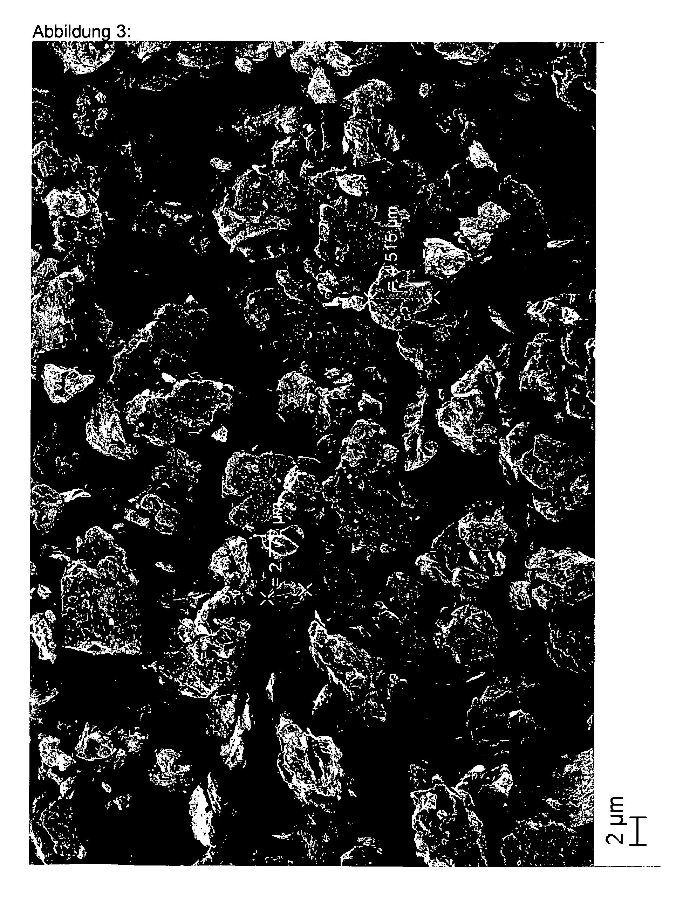

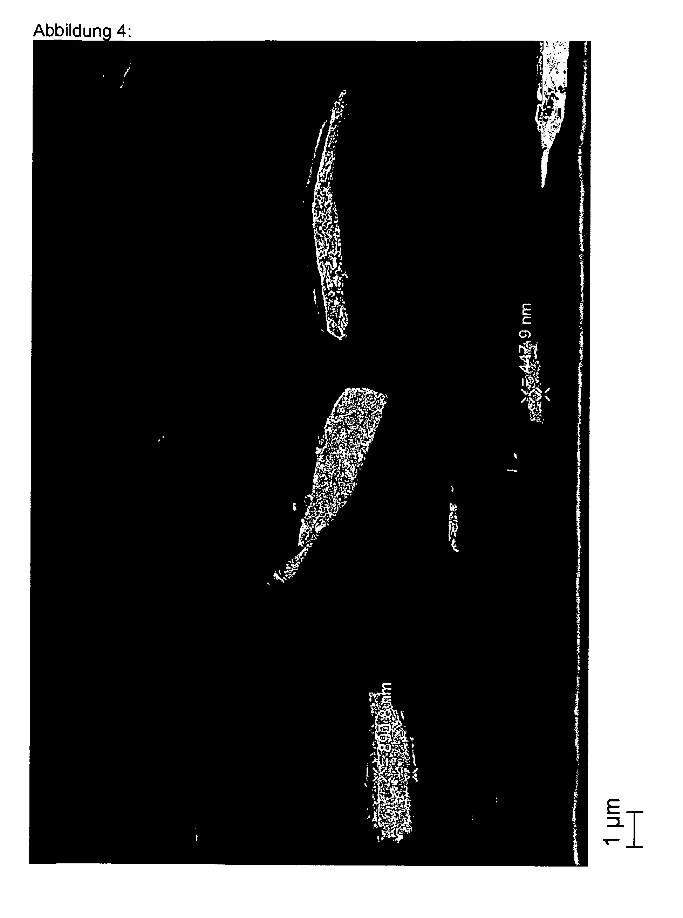

292 kg Zink, 104 kg Magnesium und 4 kg Mangan wurden in unter Argon inertisierten Schmelztiegel bei einer Temperatur von > 1300 °C geschmolzen. Die Schmelze wurde sodann durch eine Düse in einen Sprühbunker verdüst unter Erhalt eines Gries mit einer Partikelgrößenverteilung mit einem $D_{10}$ von 6,9 $\mu$m, einem $D_{50}$ von 16,8 $\mu$m und einem $D_{90}$ von 34,9 $\mu$m.
9 kg der Zink-Magnesium-Mangan-Grieses wurden in 32 Liter Testbenzin (Lösemittel) in einer Kugelmühle (Abmessungen: Länge: 100 cm, Durchmesser: 100 cm) und Mahlkugeln aus Stahl (Durchmesser 4 mm) bei einer Umdrehungsgeschwindigkeit von 40 Umdrehungen pro Minute für 7 Stunden vermahlen. Danach wurden die Mahlkugeln und das Lösungsmittel von den erhaltenen Pigmenten abgetrennt. Die Partikelgrößenverteilung wurde in einem Malvern Mastersizer 2000 gemäß Herstellerangaben bestimmt ($D_{10}$: 3,5 $\mu$m, $D_{50}$: 9,5 $\mu$m, $D_{90}$: 19,1 $\mu$m). Die mittlere Pigmentdicke wurde mittels REM zu 600 nm bestimmt, wie oben und in der DE 103 15 775 A1 (Abs. [0125] bis [0127]) beschrieben.
Aus Abbildungen 3 und 4 ist ersichtlich, dass die erhaltenen Pigmente plättchenförmig ausgeformt sind und nahezu keine Bruchstücke oder Abrieb enthielten.

Vergleichsbeispiel 3: Zinkmagnesiumlegierungspigmente (51,4 mol-% Zink, 48,6 mol-% Magnesium)

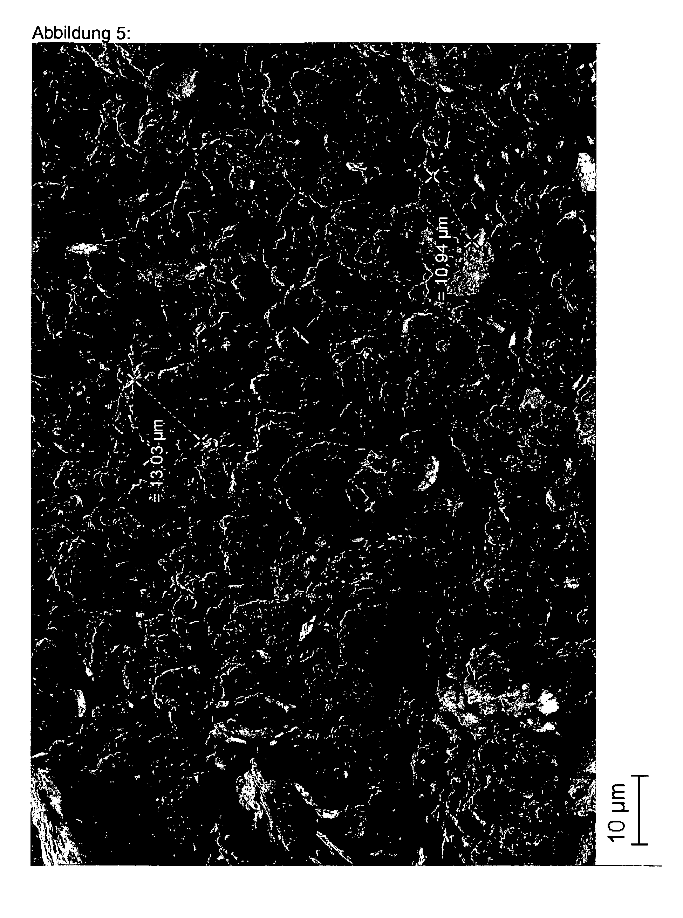

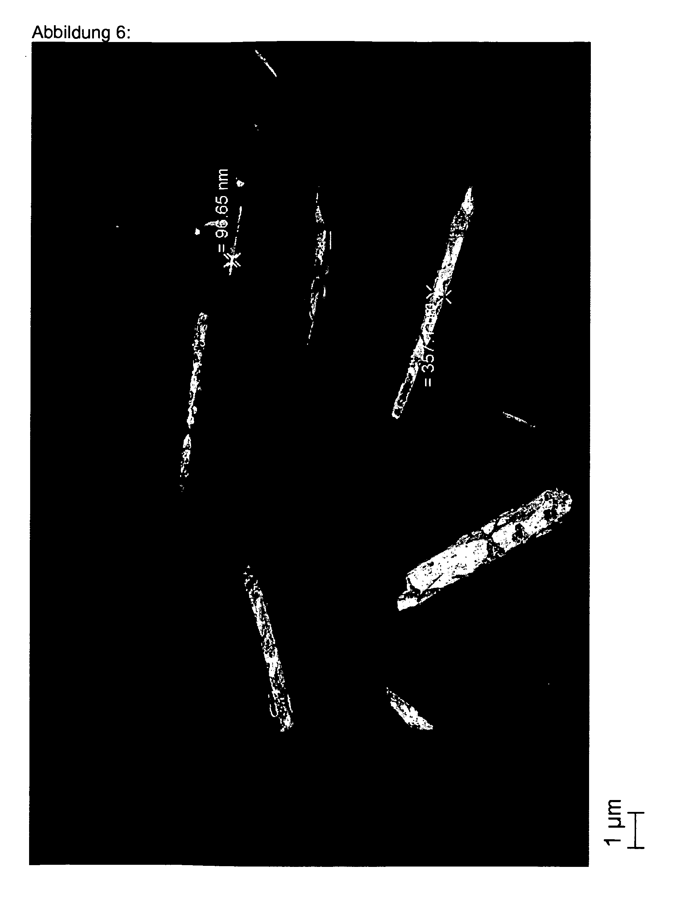

9 kg des in Vergleichsbeispiel 1 hergestellten Zink-Magnesium-Grieses wurden in 32 Liter Isopropanol (Lösemittel) in einer Rührwerkskugelmühle Netzsch RWK LMZ10 bei einem spezifischen Energieeintrag auf Material $E_m(t)$ von 4252,5 kJ/kg vermahlen. Danach wurden die Mahlkugeln und das Lösungsmittel von den erhaltenen Pigmenten abgetrennt. Die Partikelgrößenverteilung wurde in einem Malvern Mastersizer 2000 gemäß Herstellerangaben ($D_{10}$: 3,0 $\mu$m, $D_{50}$: 6,9 $\mu$m, $D_{90}$: 13,3 $\mu$m). Die mittlere Pigmentdicke wurde mittels REM zu 300 nm bestimmt, wie oben und in der DE 103 15 775 A1 (Abs. [0125] bis [0127]) beschrieben.
Aus den Abbildungen 5 und 6 sind ersichtlich, dass die erhaltenen Pigmente plättchenförmig ausgeformt sind und nahezu keine Bruchstücke oder Abrieb enthielten.

Beispiel 4: Zinkmagnesiummanganlegierungspigmente (50,64 mol-% Zink, 48,53 mol-% Magnesium, 0,83 mol-% Mangan)

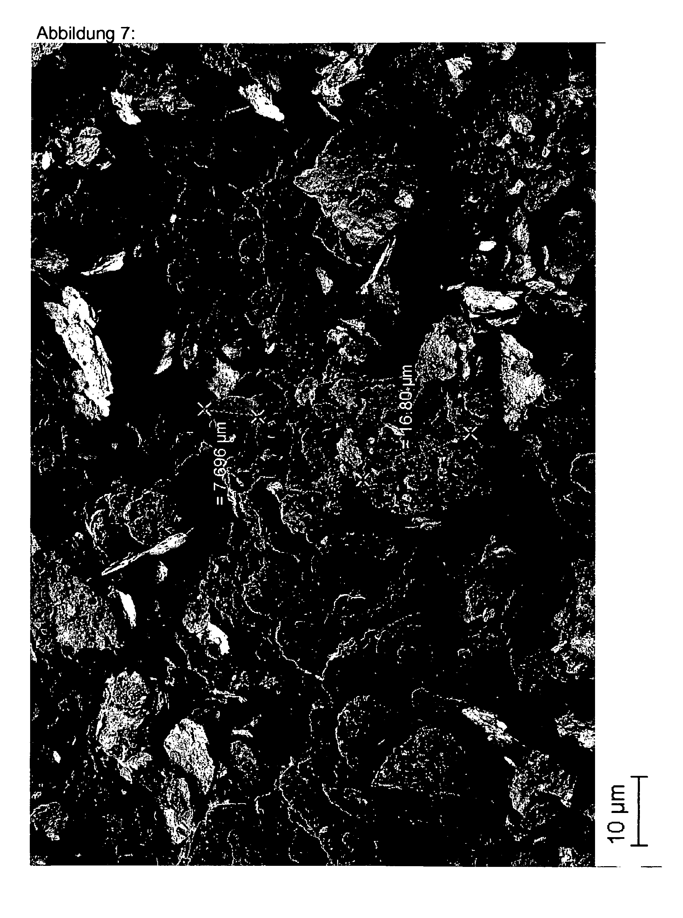

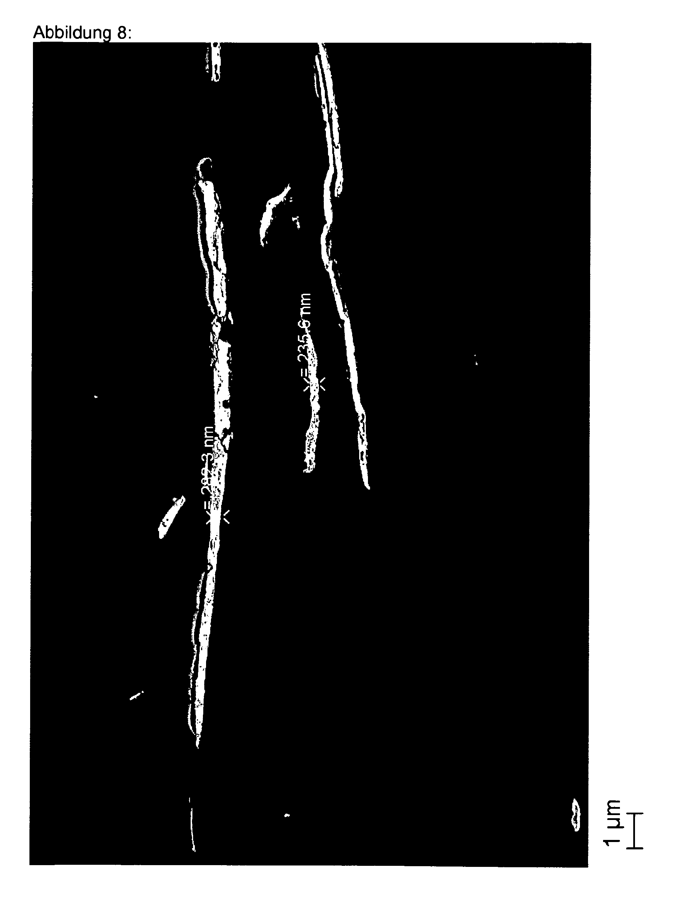

9 kg des in Beispiel 2 hergestellten Zink-Magnesium-Mangan-Grieses wurden in 32 Liter Isopropanol (Lösemittel) in einer Rührwerkskugelmühle Netzsch RWK LMZ10 bei einem spezifischen Energieeintrag auf Material $E_m(t)$ von 2835 kJ/kg vermahlen. Danach wurden die Mahlkugeln und das Lösungsmittel von den erhaltenen Pigmenten abgetrennt. Die Partikelgrößenverteilung wurde in einem Malvern Mastersizer 2000 gemäß Herstellerangaben bestimmt ($D_{10}$: 3,5 $\mu$m, $D_{50}$: 7,1 $\mu$m, $D_{90}$: 14,5 $\mu$m). Die mittlere Pigmentdicke wurde mittels REM zu 250 nm bestimmt, wie oben und in der DE 103 15 775 A1 (Abs. [0125] bis [0127]) beschrieben.
Aus den Abbildungen 7 und 8 sind ersichtlich, dass die erhaltenen Pigmente plättchenförmig ausgeformt sind und nahezu keine Bruchstücke oder Abrieb enthielten.

Beispiel 5: Zinkmagnesiummanganlegierungspigmente

400 g der Zink-Magnesium-Mangan-Grieses bzw. Zink-Magnesium-Grieses wurden in 600 ml Testbenzin (Lösemittel) in einer Kugelmühle (Abmessungen: Länge: 100 cm, Durchmesser: 100 cm) und Mahlkugeln aus Stahl (Durchmesser 7 mm) bei einer Umdrehungsgeschwindigkeit von 55 Umdrehungen pro Minute für 7 Stunden vermahlen. Danach wurden die Mahlkugeln und das Lösungsmittel von den erhaltenen Pigmenten abgetrennt. Als Schmiermittel wurde hierbei Stearinsäure eingesetzt. Die Partikelgrößenverteilung wurde in einem Malvern Mastersizer 2000 gemäß Herstellerangaben bestimmt. Die mittlere Pigmentdicke wurde mittels REM bestimmt, wie oben und in der DE 103 15 775 A1 (Abs. [0125] bis [0127]) beschrieben.

|  | Zn | Mg | Mn |
|---|---|---|---|
| Beispiel 5-1 | 51,7 mol-% | 47,9 mol-% | 0,42 mol-% |
| Beispiel 5-2 | 51,9 mol-% | 47,2 mol-% | 0,84 mol-% |
| Beispiel 5-3 | 45,7 mol-% | 53,5 mol-% | 0,79 mol-% |

|  | $D_{10}$ | $D_{50}$ | $D_{90}$ | $h_{50}$ |
|---|---|---|---|---|
| Beispiel 5-1 | 4,3 μm | 14,9 μm | 35,8 μm | 120 nm |
| Beispiel 5-2 | 3,5 μm | 13,2 μm | 33,8 μm | 110 nm |
| Beispiel 5-3 | 4,3 μm | 15,7 μm | 38,4 μm | 80 nm |

Durch das Zulegieren von Mangan konnten leicht Flakes mit einem guten Aspektverhältnis erhalten werden. Vergleichsversuche ohne zulegiertes Mangan zeigten hingegen eine bedeutend höhere Tendenz zu Zerbrechen. Auch eine deutlich längere Vermahldauer resultierte bei den Pigmenten mit Mangan nicht in der bei den Pigmenten ohne Mangan beobachteten starken Zerkleinerung.

Anwendungsbeispiel 1:

Die Pigmente von Beispiel 5-1 bis 5-3 wurden in ein Testlacksystem umfassend einen Basislack und einen Härter eingearbeitet.
Das Testlacksystem ist folgendermaßen zusammengesetzt:

| Basislack | |
|---|---|
| Ethyl-3-ethoxypropionat | 4,6 g |
| Methylamylketon | 4,0 g |
| Cymel UI-38-I (Cytec Surface Specialties) | 0,8 g |
| DEN 431 (DOW Chemical) | 30 g |
| Bentone 38 10% (Elementis Specialties) in 85 % Xylol und 5 % Ethanol | 20 g |
| MIN-U-Sil 10 (US Silica) | 6 g |
| Bariumsulfat | 30 g |
| Methylethylketon | 5,5 g |
| BYK-361-N (BYK-Chemie GmbH) | 1,2 g |
| Z-6040 Silan (Dow Corning) | 1,7 g |
| Pigmentpaste (91 % Feststoffgehalt) | 75g |

(fortgesetzt)

| Härter | |
|---|---|
| Xylene | 7,2 |
| n-Butanol | 2,9 |
| Aradur 283 (Huntsman) | 23,0 |
| EH 637 Beckopox (Cytec Surface Specialties) | 5,7 |
| Ancamine K54 (Air Products) | 2,6 |
| Z-6121 Silan (Dow Corning) | 0,8 |

Nachfolgend wurden die pigmentierten Lacksysteme auf Bleche bestehend aus Aluminium 2024-Legierung und mit reinem Aluminium beschichteter Aluminium 2024-Legierung aufgebracht. Diese beschichteten Bleche wurden dem Filiform-Test gemäß DIN-EN-3665 unterzogen und bewertet. Alle getesteten Pigmente erfüllten die Anforderungen des Filiform-Tests. Versuche mit vergleichbaren Pigmente ohne zulegiertes Mangan zeigten vergleichbare Ergebnisse. Das Zulegieren des Mangans führt somit zumindest zu keiner wesentlichen Verschlechterung der antikorrosiven Eigenschaften.

**Patentansprüche**

1. Plättchenförmige Zinkmagnesiumlegierungspigmente,
   wobei die plättchenförmigen Zinkmagnesiumlegierungspigmente 25,1 bis 76,85 mol-% Zn, 23 bis 67,3 mol-% Mg, 0,15 bis 7,6 mol-% Mn, Be, Y, Li, Sn und deren Mischungen, 0 bis 5 mol-% Al, Ti, Fe, Cu und deren Mischungen umfassen, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren.

2. Plättchenförmige Zinkmagnesiumlegierungspigmente gemäß Anspruch 1, wobei die plättchenförmigen Zinkmagnesiumlegierungspigmente 32,5 bis 72,09 mol-% Zn, 27,7 bis 61,8 mol-% Mg, 0,18 bis 6,3 mol.-% Mn, Be, Y, Li, Sn und deren Mischungen und 0 bis 4,2 mol-% Al, Ti, Fe, Cu und deren Mischungen umfassen, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren .

3. Plättchenförmige Zinkmagnesiumlegierungspigmente gemäß Anspruch 1 oder 2, wobei die plättchenförmigen Zinkmagnesiumlegierungspigmente 0,21 bis 5,7 mol-% Mn, Be, Y, Li, Sn und deren Mischungen und 0 bis 3,7 mol-% Al, Ti, Fe, Cu und deren Mischungen umfassen, jeweils bezogen auf die Gesamtmolmenge der Elemente Zn, Mg, Mn, Be, Y, Li, Sn, Al, Ti, Fe und Cu.

4. Plättchenförmige Zinkmagnesiumlegierungspigmente gemäß einem der Ansprüche 1 bis 3, wobei die plättchenförmigen Zinkmagnesiumlegierungspigmente eine mittlere Dicke aus einem Bereich von 70 nm bis unter 700 nm aufweisen.

5. Plättchenförmige Zinkmagnesiumlegierungspigmente gemäß einem der vorhergehenden Ansprüche, wobei die plättchenförmigen Zinkmagnesiumlegierungspigmente einen mittleren Durchmesser $D_{50}$ aus einem Bereich von 3,5 bis 25 $\mu$m aufweisen.

6. Plättchenförmige Zinkmagnesiumlegierungspigmente gemäß einem der Ansprüche 1 bis 5, wobei die plättchenförmigen Zinkmagnesiumlegierungspigmente ein Aspektverhältnis in einem Bereich von 10 bis 200 aufweisen.

7. Plättchenförmige Zinkmagnesiumlegierungspigmente gemäß einem der Ansprüche 1 bis 6, wobei die plättchenförmigen Zinkmagnesiumlegierungspigmente eine Größenverteilung mit einem Span ΔD gemäß Formel (I)

$$\text{Span } \Delta D = (D_{90}\text{-}D_{10})/D_{50} \qquad (I)$$

von 1 bis 2,30 aufweisen.

8. Plättchenförmige Zinkmagnesiumlegierungspigmente gemäß einem der Ansprüche 1 bis 7, wobei die plättchenförmigen Zinkmagnesiumlegierungspigmente 42,3 bis 51,1 mol-% Zn, 40,2 bis 50,5 mol-% Mg, 0,4 bis 2,3 mol-% Mn, 0 bis 4 mol-% Be, Y, Li, Sn, Al, Ti, Fe und Cu, wobei sich die mol-%-Anteile auf die Gesamtmolmenge der Elemente Zn, Mg, Mn, Be, Y, Li, Sn, Al, Ti, Fe und Cu beziehen und sich die mol-%-Anteile zu 100 mol-% summieren, sowie einer mittleren Dicke von 110 nm bis 430 nm aufweisen.

9. Plättchenförmige Zinkmagnesiumlegierungspigmente gemäß einem der Ansprüche 1 bis 8, wobei die plättchenförmigen Zinkmagnesiumlegierungspigmente durch mechanische Verformung mittels Rührwerkskugelmühlen als Vermahlungsaggregat erhalten sind.

10. Korrosionsschutzbeschichtung, wobei die Korrosionsschutzbeschichtung plättchenförmige Zinkmagnesiumlegierungspigmente gemäß einem der vorhergehenden Ansprüche enthält.

11. Gegenstand, wobei der Gegenstand Zinkmagnesiumlegierungspigmente gemäß einem der Ansprüche 1 bis 9 oder eine Korrosionsschutzbeschichtung gemäß Anspruch 10 aufweist.

12. Gegenstand gemäß Anspruch 11, wobei Gegenstand aus der Gruppe, die aus Flugzeug, Schiff, Boot, Fahrzeugrahmen, Gebäude, Fassade, Fenster- und Türrahmen, Brücke, Strommast und Windrad besteht, ausgewählt ist.

13. Gegenstand gemäß Anspruch 11 oder 12, wobei der Gegenstand aus Aluminium oder einer Aluminiumlegierung besteht oder Aluminium oder eine Aluminiumlegierung aufweist.

14. Verfahren zum Herstellen von plättchenförmigen Korrosionsschutzpigmenten gemäß einem der Ansprüche 1 bis 9, wobei das Verfahren folgenden Schritt aufweist:

Mechanisches Verformen von nicht-plättchenförmigen Partikeln, die 25,1 bis 76,85 mol-% Zn, 23 bis 67,3 mol-% Mg, 0,15 bis 7,6 mol-% Mn, Be, Y, Li, Sn und deren Mischungen, 0 bis 5 mol-% Al, Ti, Fe, Cu und deren Mischungen umfassen, jeweils bezogen auf die Gesamtmolmenge der Elemente Zn, Mg, Mn, Be, Y, Li, Sn, Al, Ti, Fe und Cu, wobei sich die mol-%-Anteile zu 100 mol-% aufsummieren.

15. Verwendung von Korrosionsschutzpigmenten gemäß einem der Ansprüche 1 bis 9 beim Korrosionsschutz eines Gegenstandes, der aus Aluminium oder einer Aluminiumlegierung besteht oder Aluminium oder eine Aluminiumlegierung aufweist.

**Claims**

1. Platelet-shaped zinc-magnesium alloy pigments,
   which platelet-shaped zinc-magnesium alloy pigments comprise 25.1 to 76.85 mol % of Zn, 23 to 67,3 mol % of Mg, 0,15 to 7.6 mol % of Mn, Be, Y, Li, Sn and mixtures thereof, 0 to 5 mol % of Al, Ti, Fe, Cu and mixtures thereof, by reference to the total molar quantity of the elements Zn, Mg, Mn, Be, Y, Li, Sn, Al, Ti, Fe and Cu in each case, the mol % quantities adding up to 100 mol %.

2. Platelet-shaped zinc-magnesium alloy pigments as claimed in claim 1, which platelet-shaped zinc-magnesium alloy pigments comprise 32.5 to 72.09 mol % of Zn, 27.7 to 61,8 mol % of Mg, 0.18 to 6.3 mol % of Mn, Be, Y, Li, Sn and mixtures thereof and 0 to 4.2 mol % of Al, Ti, Fe, Cu and mixtures thereof, by reference to the total molar quantity of the elements Zn, Mg, Mn, Be, Y, Li, Sn, Al, Ti, Fe and Cu in each case, the mol % quantities adding up to 100 mol %.

3. Platelet-shaped zinc-magnesium alloy pigments as claimed in claim 1 or 2, which platelet-shaped zinc-magnesium alloy pigments comprise 0.21 to 5.7 mol % of Mn, Be, Y, Li, Sn and mixtures thereof and 0 to 3.7 mol % of Al, Ti, Fe, Cu and mixtures thereof, by reference to the total molar quantity of the elements Zn, Mg, Mn, Be, Y, Li, Sn, Al, Ti, Fe and Cu in each case.

4. Platelet-shaped zinc-magnesium alloy pigments as claimed in one of claims 1 to 3, which platelet-shaped zinc-magnesium alloy pigments have a mean thickness within a range of 70 nm to less than 700 nm.

5. Platelet-shaped zinc-magnesium alloy pigments as claimed in one of the preceding claims, which platelet-shaped zinc-magnesium alloy pigments have a mean diameter $D_{50}$ within a range of 3.5 to 25 $\mu$m.

6. Platelet-shaped zinc-magnesium alloy pigments as claimed in one of claims 1 to 5, which platelet-shaped zinc-magnesium alloy pigments have an aspect ratio within a range of 10 to 200.

7. Platelet-shaped zinc-magnesium alloy pigments as claimed in one of claims 1 to 6, which platelet-shaped zinc-magnesium alloy pigments have a size distribution with a span ΔD in accordance with formula (I)

$$\text{Span } \Delta D = (D_{90}-D_{10})/D_{50} \qquad\qquad (I)$$

of 1 to 2.30.

8. Platelet-shaped zinc-magnesium alloy pigments as claimed in one of claims 1 to 7, which platelet-shaped zinc-magnesium alloy pigments comprise 42.3 to 51.1 mol % of Zn, 40.2 to 50.5 mol % of Mg, 0.4 to 2.3 mol % of Mn, 0 to 4 mol % of Be, Y, Li, Sn, Al, Ti, Fe and Cu, the mol % quantities relating to the total molar quantity of the elements Zn, Mg, Mn, Be, Y, Li, Sn, Al, Ti, Fe and Cu and the mol % quantities adding up to 100 mol %, and have a mean thickness of 110 nm to 430 nm.

9. Platelet-shaped zinc-magnesium alloy pigments as claimed in one of claims 1 to 8, which platelet-shaped zinc-magnesium alloy pigments are obtained by mechanical deformation using agitator ball mills as a grinding unit.

10. Anti-corrosion coating, which anti-corrosion coating contains platelet-shaped zinc-magnesium alloy pigments as claimed in one of the preceding claims.

11. Object, which object comprises zinc-magnesium alloy pigments as claimed in one of claims 1 to 9 or an anti-corrosion coating as claimed in claim 10.

12. Object as claimed in claim 11, which object is selected from the group comprising aircraft, ships, boats, vehicle frames, buildings, facades, window and door frames, bridges, electricity pylons and wind turbines.

13. Object as claimed in claim 11 or 12, which object is made from aluminium or an aluminium alloy or comprises aluminium or an aluminium alloy.

14. Method of producing platelet-shaped zinc-magnesium alloy pigments as claimed in one of claims 1 to 9, which method comprises the following step:

mechanically deforming non-platelet-shaped particles comprising 25.1 to 76.85 mol % of Zn, 23 to 67.3 mol % of Mg, 0.15 to 7.6 mol % of Mn, Be, Y, Li, Sn and mixtures thereof, 0 to 5 mol % of Al, Ti, Fe, Cu and mixtures thereof, by reference to the total molar quantity of the elements Zn, Mg, Mn, Be, Y, Li, Sn, Al, Ti, Fe and Cu in each case, the mol % quantities adding up to 100 mol %.

15. Use of anti-corrosion pigments as claimed in one of claims 1 to 9 to protect an object made from aluminium or an aluminium alloy or comprising aluminium or an aluminium alloy against corrosion.

**Revendications**

1. Pigments lamellaires constitués d'un alliage de zinc et de magnésium, les pigments lamellaires constitués d'un alliage de zinc et de magnésium comprenant 25,1 à 76,85 % en moles de Zn, 23 à 67,3 % en moles de Mg, 0,15 à 7,6 % en moles de Mn, de Be, de Y, de Li, de Sn et de mélanges de ceux-ci, 0 à 5 % en moles d'Al, de Ti, de Fe, de Cu et de mélanges de ceux-ci, chacun étant rapporté à la quantité totale en moles des éléments Zn, Mg, Mn, Be, Y, Li, Sn, Al, Ti, Fe et Cu, la somme des pourcentages en moles étant de 100 % en moles.

2. Pigments lamellaires constitués d'un alliage de zinc et de magnésium selon la revendication 1, les pigments lamellaires constitués d'un alliage de zinc et de magnésium comprenant 32,5 à 72,09 % en moles de Zn, 27,7 à 61,8 % en moles de Mg, 0,18 à 6,3 % en moles de Mn, de Be, de Y, de Li, de Sn et de mélanges de ceux-ci et 0 à 4,2 % en moles d'Al, de Ti, de Fe, de Cu et de mélanges de ceux-ci, chacun étant rapporté à la quantité totale en moles des éléments Zn, Mg, Mn, Be, Y, Li, Sn, Al, Ti, Fe et Cu, la somme des pourcentages en moles étant de 100 % en moles.

3. Pigments lamellaires constitués d'un alliage de zinc et de magnésium selon la revendication 1 ou 2, les pigments lamellaires constitués d'un alliage de zinc et de magnésium comprenant 0,21 à 5,7 % en moles de Mn, de Be, de Y, de Li, de Sn et de mélanges de ceux-ci et 0 à 3,7 % en moles d'Al, de Ti, de Fe, de Cu et de mélanges de ceux-ci, chacun étant rapporté à la quantité totale en moles des éléments Zn, Mg, Mn, Be, Y, Li, Sn, Al, Ti, Fe et Cu.

4. Pigments lamellaires constitués d'un alliage de zinc et de magnésium selon l'une des revendications 1 à 3, les pigments lamellaires constitués d'un alliage de zinc et de magnésium présentant une épaisseur moyenne comprise dans la plage de 70 à moins de 700 nm.

5. Pigments lamellaires constitués d'un alliage de zinc et de magnésium selon l'une des revendications précédentes, les pigments lamellaires constitués d'un alliage de zinc et de magnésium présentant un diamètre moyen $D_{50}$ compris dans la plage de 3,5 à 25 $\mu$m.

6. Pigments lamellaires constitués d'un alliage de zinc et de magnésium selon l'une des revendications 1 à 5, les pigments lamellaires constitués d'un alliage de zinc et de magnésium présentant un rapport d'aspect compris dans la plage de 10 à 200.

7. Pigments lamellaires constitués d'un alliage de zinc et de magnésium selon l'une des revendications 1 à 6, les pigments lamellaires constitués d'un alliage de zinc et de magnésium présentant une distribution granulométrique ayant un Span $\Delta$D selon la formule (I)

$$\text{Span } \Delta D = (D_{90}-D_{10})/D_{50} \quad (I)$$

compris entre 1 et 2,30.

8. Pigments lamellaires constitués d'un alliage de zinc et de magnésium selon l'une des revendications 1 à 7, les pigments lamellaires constitués d'un alliage de zinc et de magnésium comprenant 42,3 à 51,1 % en moles de Zn, 40,2 à 50,5 % en moles de Mg, 0,4 à 2,3 % en moles de Mn, 0 à 4 % en moles de Be, de Y, de Li, de Sn, d'Al, de Ti, de Fe et de Cu, les pourcentages en moles étant rapportés à la quantité totale en moles des éléments Zn, Mg, Mn, Be, Y, Li, Sn, Al, Ti, Fe et Cu, et la somme des pourcentages en moles étant de 100 %, et présentant une épaisseur moyenne de 110 à 430 nm.

9. Pigments lamellaires constitués d'un alliage de zinc et de magnésium selon l'une des revendications 1 à 8, les pigments lamellaires constitués d'un alliage de zinc et de magnésium étant obtenus par déformation mécanique à l'aide de broyeurs à billes munis d'un agitateur, servant d'équipement de broyage.

10. Revêtement anticorrosion, le revêtement anticorrosion contenant des pigments lamellaires constitués d'un alliage de zinc et de magnésium selon l'une des revendications précédentes.

11. Objet, l'objet comportant des pigments constitués d'un alliage de zinc et de magnésium selon l'une des revendications 1 à 9 ou un revêtement anticorrosion selon la revendication 10.

12. Objet selon la revendication 11, l'objet étant choisi dans le groupe constitué d'un avion, d'un navire, d'un bateau, d'un châssis d'automobile, d'un bâtiment, d'une façade, d'un cadre de fenêtre et de porte, d'un pont, d'un pylône électrique et d'une éolienne.

13. Objet selon la revendication 11 ou 12, l'objet étant constitué d'aluminium ou d'un alliage d'aluminium, ou comprenant de l'aluminium ou un alliage d'aluminium.

14. Procédé de fabrication de pigments lamellaires anticorrosion selon l'une des revendications 1 à 9, le procédé comprenant l'étape suivante :

déformation mécanique de particules non lamellaires, qui comprennent 25,1 à 76,85 % en moles de Zn, 23 à 67,3 % en moles de Mg, 0,15 à 7,6 % en moles de Mn, de Be, de Y, de Li, de Sn et de mélanges de ceux-ci, 0 à 5 % en moles d'Al, de Ti, de Fe, de Cu et de mélanges de ceux-ci, chacun étant rapporté à la quantité totale en moles des éléments Zn, Mg, Mn, Be, Y, Li, Sn, Al, Ti, Fe et Cu, la somme des pourcentages en moles étant de 100 % en moles.

15. Utilisation de pigments anticorrosion selon l'une des revendications 1 à 9 pour la protection contre la corrosion d'un objet constitué d'aluminium ou d'un alliage d'aluminium ou comprenant de l'aluminium ou un alliage d'aluminium.

Abbildung 1:

Abbildung 2:

Abbildung 3:

Abbildung 4:

Abbildung 5:

Abbildung 6:

Abbildung 7:

Abbildung 8:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008125610 A1
- WO 2010043708 A1
- KR 2010023855 A
- DE 102009028667 A1
- GB 846904 A
- DE 102007021602 A1
- DE 102008020216 A1

- EP 2246396 A1
- US 2877126 A
- US 20040191555 A1
- EP 2060345 A1
- US 8114527 B2
- DE 10315775 A1